# EUROPÄISCHE PATENTSCHRIFT

(11) **EP 2 898 777 B1**
(45) Veröffentlichungstag und Bekanntmachung des Hinweises auf die Patenterteilung: **17.08.2016**
(21) Anmeldenummer: 14152814.1
(22) Anmeldetag: 28.01.2014
(51) Int. Cl.: A22C 11/02

(54) **Wursthüllenbremse**
Sausage casing brake
Freins pour boyaux de saucisses

(43) Veröffentlichungstag der Anmeldung: 29.07.2015
(73) Patentinhaber: Albert Handtmann Maschinenfabrik GmbH & Co. KG, 88400 Biberach (DE)
(72) Erfinder: Bächtle, Manfred, 88433 Schemmerhofen (DE); Flach, Jürgen, 89611 Obermarchtal (DE); Hammerer, Michael, 88471 Laupheim (DE); Pfender, Wolfgang, 88250 Weingarten (DE); Schliesser, Gerhard, 88489 Wain (DE); Reutter, Siegfried, 88436 Eberhardzell (DE); Rechsteiner, Juergen, 88436 Eberhardzell (DE)
(74) Vertreter: Grünecker Patent- und Rechtsanwälte PartG mbB

(56) Entgegenhaltungen:
- EP-A1- 0 171 849
- EP-A1- 2 716 160
- DE-U1-202005 006 495

## Beschreibung

Die Erfindung betrifft ein Verfahren zum Herstellen von Würsten mit einer Füllmaschine gemäß dem Oberbegriff des Anspruchs 1, sowie eine Wursthüllenbremse und eine Füllmaschine gemäß den Oberbegriffen der Ansprüche 3 und 16.

Aus der nachveröffentlichten EP 2 716 160 A1 ist bereits eine Wursthüllenbremse bekannt, bei der die Bremsfläche in einer Ebene senkrecht zur Füllrohrlängsachse nur auf einen Teil des Umfangs der Wursthülle drückt.

Bei der maschinellen Wurstproduktion wird zunächst die Wursthülle auf das Füllrohr am Maschinenauslauf aufgebracht. Dann wird die Wursthüllenbremse am Füllrohrende positioniert. Wursthüllenbremsen werden eingesetzt, um die Wursthülle beim Füllen mit Masse (z.B. Wurstbrät) an der Füllstelle, d.h. am Füllrohrende, unter Spannung zu halten. Dies ist Voraussetzung für die Produktion von z. B. qualitativ hochwertigen, prallen Würsten.

Daneben bewirken Wursthüllenbremsen ein Mitdrehen der noch ungefüllten Wursthülle auf dem Füllrohr während des Abdrehens. Das Abdrehen ist eine Methode für das Abteilen eines Wurststrangs. Bei der Verarbeitung von Naturdärmen wird hauptsächlich das Abdrehen zum Abteilen der Würste verwendet. Zuerst wird in den Darm die pastöse Masse, beispielsweise mit Hilfe eines Vakuumfüllers, über das Füllrohr gefüllt. Damit sich der Darm entsprechend bis zu seinem Füllgrad auffüllt, wird durch die Wursthüllenbremse die Abzugsgeschwindigkeit der Wursthülle vom Füllrohr eingestellt. Diese ist normalerweise etwas kleiner als die Ausstoßgeschwindigkeit der pastösen Masse. Ist die Portionslänge oder das Portionsgewicht erreicht, wird der Wurststrang abgedreht. Hierbei wird der gefüllte Strang auf der in Transportrichtung befindlichen Seite gegen Verdrehen festgehalten und auf der anderen Seite, die dem Füllrohr zugewandt ist, verdreht, bis sich der Darm einschnürt und entsprechend der eingestellten Abdrehanzahl verdreht.

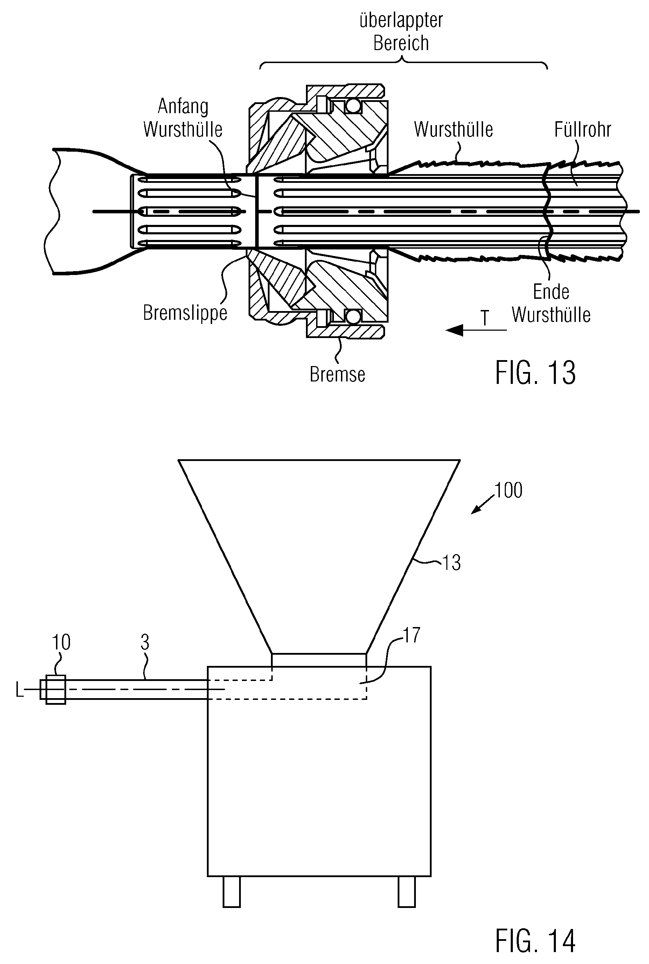

Wie bereits erwähnt, wird bei der Wurstherstellung unter anderem der Saitling (Naturdarm) eingesetzt. Den Saitling gibt es in verschiedenen Kalibersortierungen (gängig sind Größen zwischen 16/18 mm und 26/28 mm) und Qualitäten (Länge der Einzelstücke, sowie z.B. Füllfestigkeit). Konfektioniert wird dieser entweder aus lauter Einzelstücken mit typischen Längen bis zu 8 m, insbesondere jedoch von 3 bis 4 m oder aber auch in überlappter Ausführung. Ein überlappter Saitling ist ein Darmstrang aus Einzelenden, d.h. einzelnen Darmstücken, die jeweils auf einer Länge von z. B. 30 cm übereinander gesteckt sind, wie dies insbesondere aus Fig. 13 hervorgeht. Am in Transportrichtung T betrachteten vorderen Bereich des Füllrohrs ist das Ende einer ersten Wursthülle zu erkennen, während in Transportrichtung T auf dem Füllrohr nach diesem Ende der Anfang der nachfolgenden Wursthülle, die innerhalb der äußeren vorhergehenden Wursthülle angeordnet ist. Zwischen den Enden liegt der überlappte Bereich. Ein überlappter Saitling kann dann insgesamt eine Länge von 20 bis 30 m aufweisen, um eine mehr oder weniger kontinuierliche Produktion zu gewährleisten. Durch die überlappten Saitlinge kann die Produktionsleistung deutlich erhöht werden, da die Zeiten für Darmwechsel deutlich reduziert werden. Probleme treten aber dann auf, wenn z.B. pralle Portionen gefordert sind, wie dies oft bei den Produkten "Frankfurter" oder "Wiener" der Fall ist.

Um pralle Portionen herstellen zu können, muss die Wursthülle bzw. der Darm relativ stark gebremst werden, so dass die ausströmende pastöse Masse den Darm entsprechend bis zur Füllgrenze ausfüllen kann. Eine Bremslippe des Bremsrings der Wursthüllenbremse drückt dann den Darm mit größerer Kraft auf das Füllrohr. Der Darmanfang einer überlappten Stelle bleibt dadurch jedoch eventuell bedingt durch den Druck der Bremslippe am Füllrohr hängen, so dass die Überlappung aufgehen kann und der Produktionsprozess gestoppt werden muss. Auch beim Abdrehen, d.h. bei Rotation des Füllrohrs, kann es zu Problemen kommen.

Bekannte sich drehende Wursthüllenbremsen bestehen aus einem geschlossenen Bremsring in unterschiedlichen geometrischen Ausführungen. Dabei ist, wie auch aus Fig. 13 hervorgeht, die Bremslippe des Bremsrings oft senkrecht oder schräg zur Füllrohrlängsachse angeordnet. Die Einstellung der Bremskraft erfolgt entweder fest durch einen vorgegebenen Durchmesser, welcher kleiner ist als der Füllrohrdurchmesser oder aber durch Andrücken des Bremsrings bzw. der Bremslippe an das Füllrohr mit Hilfe von entsprechenden zueinander einstellbaren Verstellmitteln 5a,b, wie aus Fig. 13 hervorgeht. Einen weiteren Einfluss auf die Bremskraft hat die Härte bzw. die Elastizität des Materials, welches für die Bremse verwendet wird. Neben den bereits genannten Funktionen muss die Wursthüllenbremse auch den gerafften Darm entraffen, und beim Abdrehvorgang die radiale Darmmitnahme sicherstellen. Die Drehzahl des Füllrohrs und der angetriebenen Wursthüllenbremse sind entweder gleich oder das Füllrohr dreht sich, während die Wursthüllenbremse stillsteht.

Um das gewünschte Produkt im Naturdarm herstellen zu können, muss die Wursthüllenbremse entsprechend feinfühlig eingestellt werden. Vor allem bei der Verarbeitung von überlappten Saitlingen stößt das bisherige System schnell an seine Grenzen. Die Einstellung der Bremskraft gestaltet sich hier sehr schwierig, da
- bei zu stark eingestellter Bremskraft die überlappten Stellen aufgezogen werden und bei
- zu schwacher Bremswirkung Lufteinschlüsse und unterfüllte Produkte erzeugt werden.
Hiervon ausgehend liegt der vorliegenden Erfindung die Aufgabe zugrunde, einen Bremsring, eine Wursthüllenbremse, eine Füllmaschine sowie ein entsprechendes Verfahren bereitzustellen, die auch das Füllen von überlappten Saitlingen auf einfache und zuverlässige Art und Weise ermöglichen.

Erfindungsgemäß wird diese Aufgabe durch die Merkmale der Ansprüche 1, 3 und 16 gelöst.

Bevorzugte ausführungsformen ergeben sich aus den Unteransprüchen.

Gemäß der vorliegenden Erfindung werden Würste mit einer Füllmaschine hergestellt, wobei pastöse Masse durch ein Füllrohr in eine auf das Füllrohr geraffte Wursthülle ausgestoßen wird und auf die Wursthülle mittels Wursthüllenbremse eine Bremskraft ausgeübt wird, indem eine Bremsfläche eines Bremsrings auf die Wursthülle drückt. Die Bremsfläche erstreckt sich dabei derart um die Füllrohrlängsachse, dass in einer Ebene senkrecht zur Füllrohrlängsachse die Bremsfläche des Bremsrings nur auf einen Teil des Umfangs der Wursthülle drückt und sich die Bremskraft, die die Bremsfläche auf die Oberfläche der Wursthülle ausübt, in einer Richtung entlang der Füllrohrlängsachse L verteilt. Die Füllrohrlängsachse entspricht dabei der mittleren Längsachse des Bremsrings bzw. der Wursthüllenbremse, die in der Mitte der Aussparung, in der das Füllrohr zu liegen kommt, verläuft. Unter Füllrohrlängsachse versteht man auch die Verlängerung der Achse über das Füllrohr hinaus. Dass die Bremskraft, die die Bremsfläche auf die Oberfläche der Wursthülle ausübt, in einer Richtung entlang der Füllrohrachse verteilt wird, bedeutet dass die Kraft an unterschiedlichen Positionen in Richtung der Füllrohrlängsachse L wirkt und vorzugsweise auch, dass zumindest abschnittsweise gilt, dass in Ebenen E senkrecht zur Füllrohrlängsachse an unterschiedlichen Positionen in Richtung der Füllrohrlängsachse L die Bremskraft an unterschiedlichen Umfangsbereichen der Wursthülle wirkt, wobei sich die Umfangsbereiche überlappen können aber die Bremskraft auch an komplett unterschiedlichen Winkelbereichen des Umfangs wirken kann.

Unter Bremsfläche versteht man hier die Fläche des Bremsrings, die zum Halten bzw. Bremsen der Wursthülle in Kontakt mit der Wursthülle kommt und beispielsweise auf das Füllrohr oder eine einen Bremsring umgebende Fläche z.B. Hülse drückt. Dazu kann eine Bremslippe vorgesehen sein. Unter Bremslippe versteht man z. B. einen im Querschnitt konisch auf die Bremsfläche zulaufenden Abschnitt des Bremsrings. Gemäß der vorliegenden Erfindung wirkt nun die Bremsfläche im Gegensatz zum Stand der Technik nicht mehr in einer Ebene, beispielsweise rund um das Füllrohr. Die Bremsfläche hat nun auch eine Erstreckung in Richtung der Füllrohrlängsachse. Im Gegensatz dazu verteilt sich die Bremskraft, die die Bremsfläche auf die Oberfläche der Wursthülle ausübt in einer Richtung entlang der Füllrohrachse L. Unter einem Teil des Umfangs der Wursthülle versteht man beispielsweise einen Bereich von < 180° des Umfangs in der Ebene E. Diese entsprechende Bedingung gilt für alle Schnittebenen E über die gesamte Länge des Bremsrings.

Im jeweils "freien Bereich", in dem die Bremsfläche nicht an der Wursthülle (bzw. dem darunterliegenden Füllrohr) anliegt, kann beispielsweise die überlappte Stelle von zwei Darmstücken ungehindert weiter abgezogen werden. Da sich die Bremsfläche in einer Richtung entlang der Füllrohrlängsachse erstreckt, verteilt sich die Kraft in Richtung Füllrohrlängsachse, wobei die Gesamtbremskraft auf die Wursthülle je nach Größe der Überdeckung des Umfangs der Wursthülle (bzw. des darunterliegenden Füllrohrs) durch die Bremsfläche eingestellt werden kann. Auch bei stärkerer Bremskraft ergeben sich nicht die zuvor genannten Nachteile. Bei gleicher Bremskraft kann so im Vergleich zu den herkömmlichen Bremsringen, die nur in einer Ebene auf den gesamten Umfang der Wursthülle drücken, ein verbessertes Produktionsergebnis erzielt werden.

Insgesamt erlaubt das erfindungsgemäße Verfahren eine gute Verarbeitung von Naturdärmen, insbesondere überlappten Saitlingen, was eine Reduzierung des Reworks sowie eine Reduzierung des Ausschusses durch weniger Produktionsstopps mit sich bringt. Gleichzeitig können prallere Produkte bei gleichbleibender Produktionsqualität ermöglicht werden. Es ergibt sich eine höhere, effektivere Leistung und entsprechend verbesserte Prozesssicherheit. Zudem ergibt sich auch eine saubere Entraffung des Darms bzw. der Wursthülle sowie eine geringere Anzahl von Darmplatzern.

Die Wursthüllenbremse kann zum Herstellen einer Abdrehstelle gedreht werden, wobei die Drehzahl von der Drehzahl des Füllrohrs abweichen kann, gleich sein kann oder aber veränderbar sein kann. Unterscheidet sich die Drehzahl, so entstehen andere Reibverhältnisse, wodurch der überlappte Wursthüllenbereich die Wursthüllenbremse besser passieren kann.

Der Bremsring einer Wursthüllenbremse ist so ausgebildet, dass sich seine Bremsfläche derart um das Füllrohr erstrecken kann, dass in einer Ebene E senkrecht zur Füllrohrlängsachse die Bremsfläche nur an einem Teil des Umfangs des Füllrohrs anliegt. Dies gilt für alle Schnittebenen E über die gesamte Länge des Bremsrings. Bei einem Füllrohr mit in Längsrichtung angeordneten Rillen in der Oberfläche die dem Bremsring zugewandt ist, ist der Bremsring derart ausgebildet, dass die Bremsfläche in der Ebene E nur an einem Teil der virtuellen Einhüllenden der Füllrohrsoberfläche anliegt. (Dies gilt für alle Ausführungsbeispiele) Der Bremsring kann dabei nicht geschlossen ausgebildet sein sondern offen, weist also einen Anfang und ein Ende auf, wobei die offenliegende Anfangsfläche des Bremsrings in Transportrichtung hinter der entsprechenden Endfläche angeordnet ist. Die Transportrichtung entspricht der Ausstoßrichtung aus dem Füllrohr. Ein offener Bremsring kann somit auf einfache Weise zumindest um einen Teilumfang um die Oberfläche des Füllrohrs entsprechend der vorliegenden Erfindung gewunden werden. Ein entsprechender Bremsring ist einfach zu fertigen. Es ist aber auch möglich, dass ein Verbindungssteg zwischen Anfangs- und Endfläche vorgesehen ist.

Gemäß der Erfindung kann sich also der Bremsring bzw. die Bremsfläche des Bremsrings in einer Richtung entlang der Füllrohrlängsachse zumindest um einen Teil des Umfangs des Füllrohrs winden, so dass es vorzugsweise eine Ebene K gibt, die die Füllrohrlängsachse L enthält und in der auf gegenüberliegenden Seiten des Füllrohrs die Bremsfläche auf gegenüberliegenden Seiten an in Längsrichtung des Füllrohrs zueinander versetzten Stellen anliegt. Unter dem Ausdruck Windung versteht man in dieser Anmeldung eine Windung mit Steigung.

Der Bremsring muss sich nicht um den gesamten Umfang, d.h. einen Bereich von 360°, um das Füllrohr winden, sondern es reicht aus, je nach Anwendung, bereits einen Teilbereich zu überdecken. Vorteilhafterweise deckt der Bremsring einen Umfangsbereich von 300 bis 720° ab, wobei 360° einer vollständigen Windung um den gesamten Umfang entspricht. Gemäß einer ganz besonders vorteilhaften Ausgestaltung weist der Bremsring eine Spiralform auf, im Sinne von Helix bzw. zylindrischer Spirale und windet sich spiralförmig um das Füllrohr. Dabei muss es sich nicht um eine exakt mathematische Spirale handeln. Wesentlich ist dabei, dass sich der Bremsring in einer Richtung der Füllrohrlängsachse L um das Füllrohr windet. Auch eine Teilspirale (überdeckter Umfangsbereich < 360° ist möglich. Die Steigung der Windung bzw. Spirale muss nicht konstant sein.

Die Ganghöhe der Spirale bzw. Helix kann dabei in einem Bereich von > 0 mm bis 30 mm, insbesondere 5 mm bis 15 mm liegen. Die Ganghöhe ist die Strecke, um die sich die Spirale bei einer vollen Umdrehung (360°) in einer Richtung entlang der Füllrohrlängsachse L windet.

Der Bremsring kann auch mehrteilig ausgebildet sein, also nicht aus einem Stück gebildet sein, sondern mehrere um das Füllrohr angeordnete Bremsringteile, insbesondere mindestens zwei Spiralabschnitte, aufweisen. Dazu können beispielsweise zwei Spiralabschnitte, insbesondere mit einer Überdeckung des Umfangs von größer oder kleiner oder gleich 180°, vorzugsweise 100 bis 300° gegenüberliegend angeordnet sein. Eine solche Anordnung ist besonders platzsparend.

Vorteilhafterweise ist der Bremsring aus einem elastischen Material gebildet, insbesondere einem Elastomer.

Ein spezielles Andrücken des Bremsrings zum Verstellen der Bremskraft, beispielsweise über eine Verspanneinrichtung, ist hier nicht zwingend notwendig.

Die Wursthüllenbremse übt eine Bremskraft auf die Wursthülle aus, indem eine Bremsfläche eines Bremsrings auf die Wursthülle drückt. Die Bremsfläche erstreckt sich derart um die Füllrohrlängsachse, dass in einer Ebene E senkrecht zur Füllrohrlängsachse die Bremsfläche des Bremsrings nur auf einen Teil des Umfangs der Wursthülle drücken kann, und die Bremskraft, die die Bremsfläche auf die Oberfläche der Wursthülle ausübt, in einer Richtung entlang der Füllrohrlängsachse L verteilt wird.

Die Wursthüllenbremse ist geeignet zum Durchführen des Verfahrens nach Anspruch 1 oder 2.

In besonders vorteilhafter Weise ist die Bremsfläche im Gegensatz zum Stand der Technik unsymmetrisch zur Füllrohrlängsachse L. Gemäß einem bevorzugten Ausführungsbeispiel ist der Bremsring derart angeordnet, dass er sich um das Füllrohr herum erstrecken kann, derart, dass die Bremsfläche auf die Füllrohroberfläche bzw. die dazwischenliegende Wursthülle drücken kann.

Die Wursthüllenbremse kann auch eine Bremsringhalterung umfassen, die unsymmetrisch zur Füllrohrlängsachse angeordnet ist, damit der erfindungsgemäße Bremsring gehalten werden kann. Dabei kann die Bremsringhalterurig auch eine Verspanneinrichtung aufweisen, die eine veränderbare Kraft auf den Bremsring ausübt, derart, dass die Bremskraft verstellbar ist und die Verspanneinrichtung zwei Verspannmittel umfasst, zwischen denen der Bremsring angeordnet ist, wobei die Verspannmittel jeweils nicht symmetrisch zur Füllrohrlängsachse ausgebildet sind. Da der Bremsring nun auch nicht mehr symmetrisch zur Füllrohrlängsachse in der Wursthüllenbremse gehalten wird, muss auch die Verspanneinrichtung entsprechend ausgebildet werden. Die Wursthüllenbremse kann jedoch auch so ausgebildet sein, dass die Bremskraft nicht über eine Verspanneinrichtung verstellbar ist. Dann kann der Aufbau der Wursthüllenbremse wesentlich vereinfacht werden, da der Bremsring dann lediglich durch eine Bremsringhalterung vor einem Verrutschen in Längsrichtung und gegen Verdrehen gehalten werden muss, beispielsweise in einer Aussparung, in der der Bremsring gehalten wird oder durch ein Halteteil, das verhindert, dass sich der Bremsring in Transportrichtung T bewegt und sich verdreht. Vorzugsweise überdeckt dann, wenn keine Verspanneinrichtung vorgesehen ist, der Bremsring das Füllrohr um 300° bis 720°.

Gemäß einer weiteren möglichen Ausführungsform ist der Bremsring geschlossen, jedoch wird dieser schräg auf dem Füllrohr angeordnet, wobei die Ebene, in der die Bremsfläche liegt, zu einer Ebene, die senkrecht auf der Füllrohrlängsachse L steht, um > 0° bis 45° geneigt ist. Hierdurch können die überlappten Stellen aufgrund des ellipsenförmigen Verlaufs der Bremsfläche den Bremsring in Transportrichtung räumlich versetzt besser passieren.

Die Wursthüllenbremse umfasst einen Antrieb, über den der Bremsring in seiner Halterung, insbesondere mit einer variablen Drehzahl, gedreht werden kann. Wird beim Abdrehvorgang die Wursthüllenbremse mit dem beispielsweise spiralförmigen Bremsring mit einer Drehzahl angetrieben, die von der Drehzahl des Füllrohrs abweicht, so entstehen andere Reibverhältnisse, wodurch der überlappte Wursthüllenbereich die Darmbremse besser passieren kann.

Gemäß einer anderen Ausführungsform der vorliegenden Erfindung ist der Bremsring nun nicht um das Füllrohr herum angeordnet sondern an dem Füllrohrende angeformt, beispielsweise angespritzt, wobei die Bremsfläche gegen eine um den Bremsring angeordnete Fläche, insbesondere eine Hülse drückt, wobei die Wursthülle zwischen der Fläche und dem am Füllrohr angeformten Bremsring läuft und gebremst wird. Auch hier kann, wie bei dem zuvor beschriebenen Bremsring, der Bremsring aus einem elastischen Material, insbesondere Elastomer, gebildet sein. Um den erfindungsgemäßen Verlauf der Bremsfläche zu realisieren, kann entweder der Bremsring eine sich um die Füllrohrlängsachse windende Erhebung aufweisen, wobei die Bremsfläche am oberen Ende dieser Erhebung des Bremsrings angeordnet ist. Es ist jedoch auch möglich, dass der Bremsring eine um die Füllrohrlängsachsen zu windende Vertiefung aufweist.

Alternativ ist es möglich, dass die Fläche; die den Bremsring umgibt, eine sich um die Füllrohrlängsachse windende Erhebung aufweist, so dass der Bremsring nur gegen diese Erhebung drückt, so dass die Bremsfläche dann entsprechend der vorliegenden Erfindung in einer Ebene E nur auf einen Teil des Umfangs der Wursthülle drückt und sich die Bremskraft in der Füllrohrlängsachse L verteilen kann. Alternativ dazu kann auch die umgebende Fläche eine entsprechende, sich um die Füllrohrlängsachse L windende Aussparung bzw. Rille aufweisen. Vorteilhafterweise weist die Hülse einen sich in Transportrichtung der Würste konisch verjüngenden Verlauf auf.

Die Erfindung betrifft auch eine Füllmaschine zum Befüllen von Wursthülle mit pastöser Masse mit einem Füllrohr sowie mit einer Wursthüllenbremse, insbesondere nach einem der Ansprüche 3 bis 15.

Gemäß einem besonderen Ausführungsbeispiel der vorliegenden Erfindung ist nun die Füllmaschine zum Befüllen von Wursthülle derart ausgebildet, dass sich bei Drehung des Füllrohrs mit einem Antrieb beim Abdrehen andere Reibverhältnisse ergeben.

Dabei kann z.B. der Bremsring derart ausgebildet sein, dass seine Bremsfläche um die Füllrohrachse L gewunden ist.

Dabei kann sich der Bremsring selbst um die Füllrohrlängsachse winden.

Alternativ kann auch die Oberfläche des Füllrohrs oder die dem Füllrohr zugewandte Oberfläche des Bremsrings eine entsprechende Erhebung oder Vertiefung aufweisen, die sich vorzugsweise um die Füllrohrlängsachse windet.

Schließlich ist es auch möglich, dass die Oberfläche des Bremsrings oder eine um den Bremsring angeordnete Fläche, insbesondere Hülse, eine Erhebung oder Vertiefung aufweist, die sich vorzugsweise um die Füllrohrlängsachse windet.

Diese Ausführungsbeispiele sind insbesondere vorteilhaft im Zusammenhang mit einem Antrieb, über den der Bremsring mit variabler Drehzahl gedreht werden kann, da es hier, wie auch schon zuvor beschrieben, zu vorteilhaften Reibverhältnissen kommt, die das Durchrutschen der überlappten Stellen begünstigen. Über die Länge, Breite und Steigung der Erhebungen oder Vertiefungen bzw. des Bremsrings kann exakt die Bremskraft eingestellt werden.

Auch für dieses Ausführungsbeispiel gilt, dass die Bremsfläche in einer Ebene E senkrecht zur Füllrohrlängsachse L nur auf einen Teil des Umfangs der Wursthülle drückt. Die Erhebungen müssen nicht zwangsläufig durchgehend ausgebildet sein, sondern können Unterbrechungen aufweisen. Auch hier gilt, dass die Ganghöhe der entsprechenden Windungen der Erhebungen oder Vertiefungen bzw. des Bremsrings in einem Bereich von > 0 mm bis 30 mm, insbesondere 5 mm bis 15 mm liegt. Vorzugsweise sind auch hier die Windungen spiralförmig wie auch in Zusammenhang mit den vorhergehenden Ausführungsbeispielen beschrieben wurde. Die Steigung muss nicht konstant sein und die Ganghöhe entspricht den Werten wie in Zusammenhang mit dem Bremsring beschrieben wurde.

Gemäß einer weiteren bevorzugten Ausführungsform kann der Bremsring auch als Hülse ausgebildet sein, deren Innenfläche in Form einer Erhebung oder Vertiefung ausgebildet ist, die sich um die Füllrohrlängsachse windet.

Gemäß einer bevorzugten Ausführungsform entsteht, in der Ebene (E) betrachtet, mindestens ein freier Abschnitt, durch den eine Wursthülle ungebremst geführt werden kann, wobei sich der mindestens eine Abschnitt in der Ebene (E) über mindestens 20° des Umfangs des Füllrohrs erstreckt.

Die Erfindung wird nachfolgend unter Bezugnahme der folgenden Figuren näher erläutert.
- Fig. 1: zeigt eine perspektivische Darstellung eines Bremsrings gemäß einer Ausführungsform der vorliegenden Erfindung.
- Fig. 2a: zeigt eine Seitenansicht des in Fig. 1 gezeigten Bremsrings.
- Fig. 2b: zeigt einen Schnitt durch Fig. 2a entlang der Linie A - A
- Fig. 3: zeigt einen Längsschnitt durch eine Wursthüllenbremse gemäß einer Ausführungsform der vorliegenden Erfindung mit einem Bremsring, wie er in Fig. 1 dargestellt ist.
- Fig. 4a: zeigt in perspektivischer Darstellung eine weitere Ausführungsform eines Bremsrings gemäß der vorliegenden Erfindung.
- Fig. 4b: zeigt einen Querschnitt durch den in Fig. 4a gezeigten Bremsring.
- Fig. 5: zeigt in perspektivischer Darstellung eine weitere Ausführungsform eines Bremsrings gemäß der vorliegenden Erfindung.
- Fig. 6: zeigt in perspektivischer Darstellung eine weitere Ausführungsform eines Bremsrings gemäß der vorliegenden Erfindung.
- Fig. 7: zeigt eine perspektivische Darstellung eines weiteren Ausführungsbeispiels gemäß der vorliegenden Erfindung mit zwei gegenüberliegenden Bremsringteilen.
- Fig. 8: zeigt den in Fig. 7 gezeigten Bremsring in einer anderen Perspektive.
- Fig. 9: zeigt ein weiteres Ausführungsbeispiel gemäß der vorliegenden Erfindung in perspektivischer Darstellung mit zwei gegenüberliegenden Bremsringteilen.
- Fig. 10: zeigt den in Fig. 9 gezeigten Bremsring in einer anderen Perspektive.
- Fig. 11: zeigt den in Fig. 9 und 10 gezeigten Bremsring in einer weiteren Perspektive.
- Fig. 11a: zeigt eine Seitenansicht des in Fig. 9 -11 gezeigten Ausführungsbeispiels.

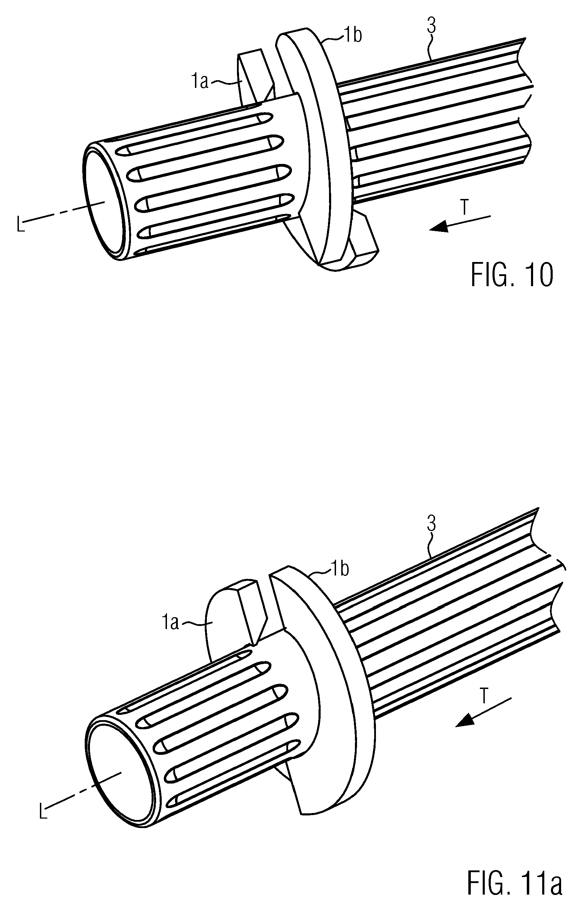

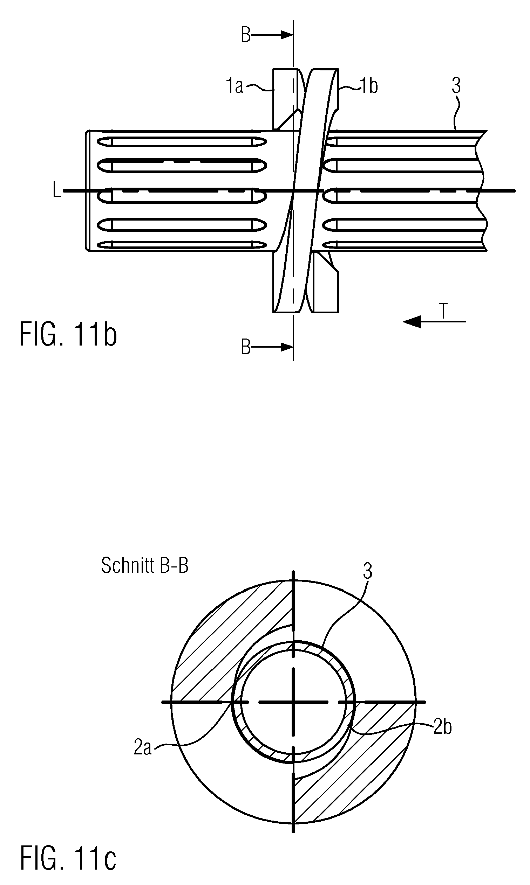

- Fig. 11 b: zeigt einen Schnitt entlang der Linie B-B in Fig. 11 a.

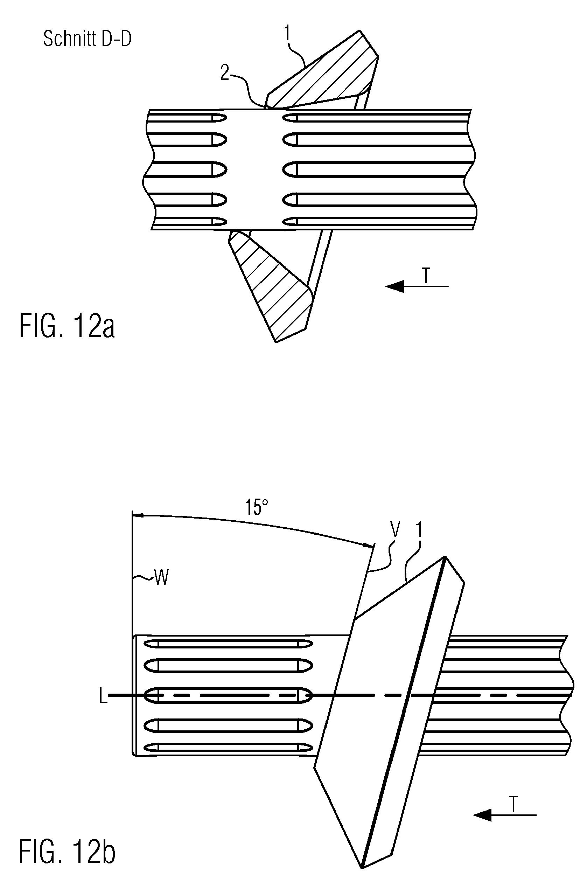

- Fig. 12a: zeigt einen Längsschnitt durch eine weitere Ausführungsform eines Bremsrings gemäß der vorliegenden Erfindung.
- Fig. 12b: zeigt eine Seitenansicht des in Fig. 12a gezeigten Schnitts.

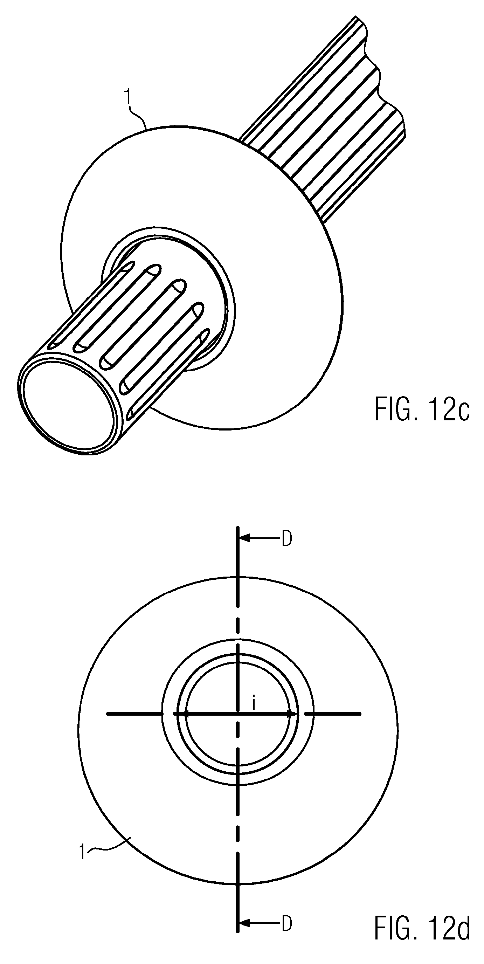

- Fig. 12c: zeigt eine perspektivische Darstellung des in den Fig. 12a, 12b gezeigten Bremsrings.
- Fig. 12d: zeigt eine Aufsicht auf den in den Fig. 12a-12c gezeigten Bremsring.
- Fig. 13: zeigt grob schematisch einen Schnitt durch eine Wursthüllenbremse gemäß dem Stand der Technik.
- Fig. 14: zeigt grob schematisch eine Füllmaschine mit Wursthüllenbremse.

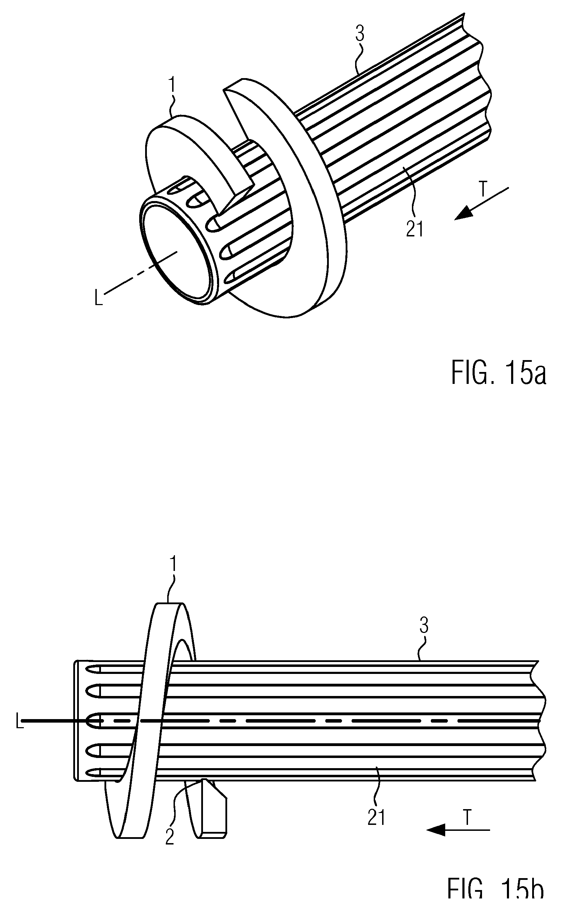

- Fig. 15a: zeigt in perspektivischer Darstellung ein weiteres Ausführungsbeispiel gemäß der vorliegenden Erfindung.
- Fig. 15b: zeigt das in Fig. 15a gezeigte Ausführungsbeispiel aus einer seitlichen Ansicht.

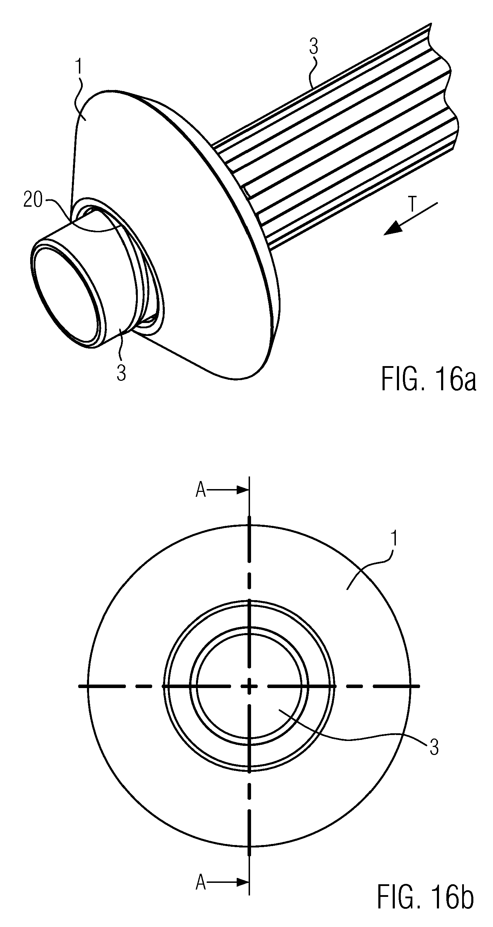

- Fig. 16a: zeigt eine perspektivische Darstellung eines weiteren Ausführungsbeispiels der vorliegenden Erfindung.
- Fig. 16b: zeigt die Vorderansicht des in Fig. 16a gezeigten Ausführungsbeispiels.

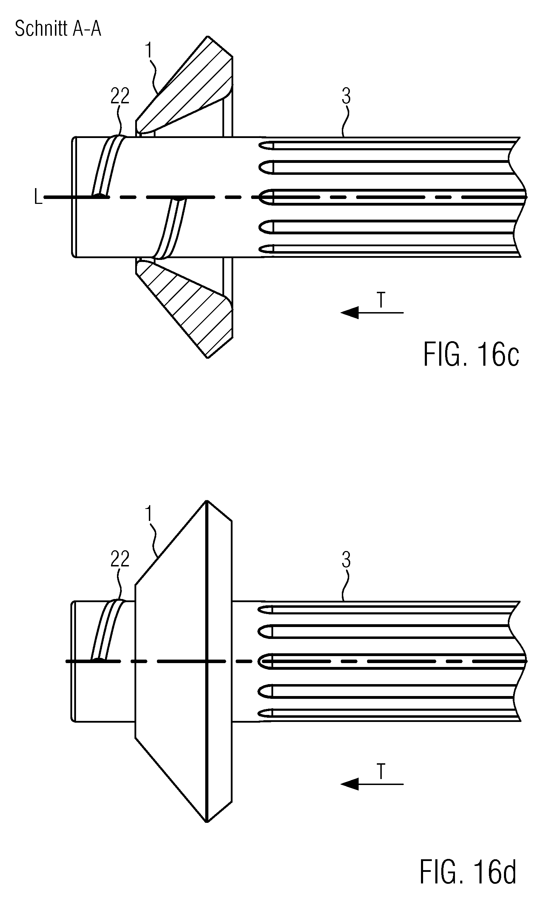

- Fig. 16c: zeigt einen Schnitt entlang der Linie A-A der Fig. 16b.
- Fig. 16d: zeigt eine Seitenansicht des Ausführungsbeispiels, das in Fig. 16a-c gezeigt ist.

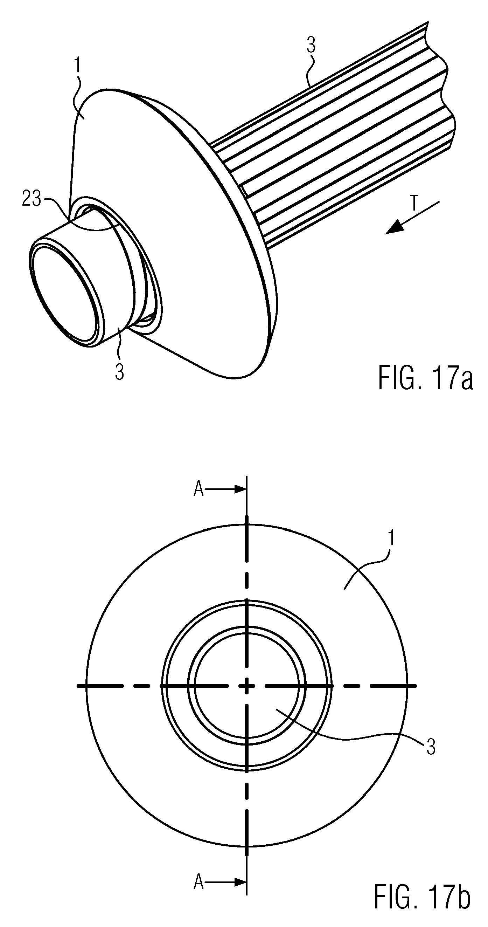

- Fig. 17a: zeigt eine perspektivische Darstellung eines weiteren Ausführungsbeispiels der vorliegenden Erfindung.
- Fig. 17b: zeigt die Vorderansicht des in Fig. 17a gezeigten Ausführungsbeispiels.

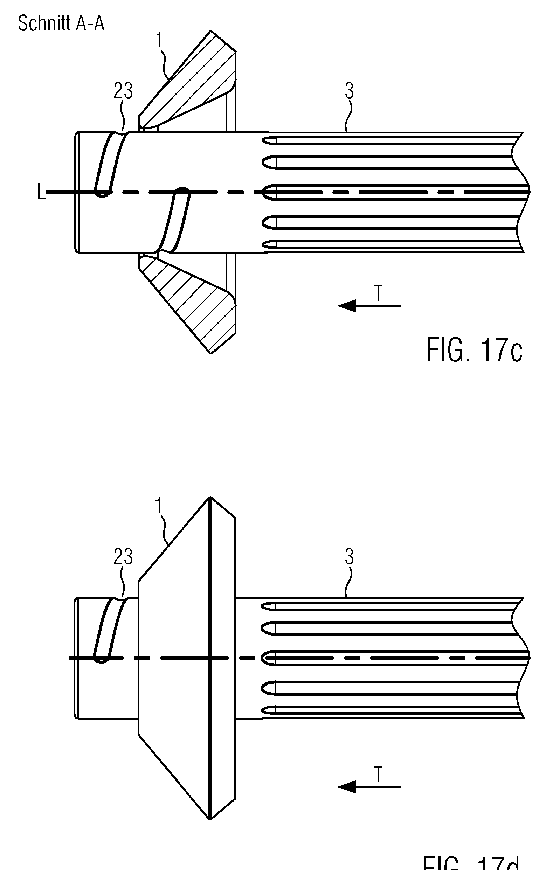

- Fig. 17 c: zeigt einen Schnitt entlang der Linie A-A der Fig. 17b.
- Fig. 17d: zeigt eine Seitenansicht des Ausführungsbeispiels, das in Fig. 17a-c gezeigt ist.

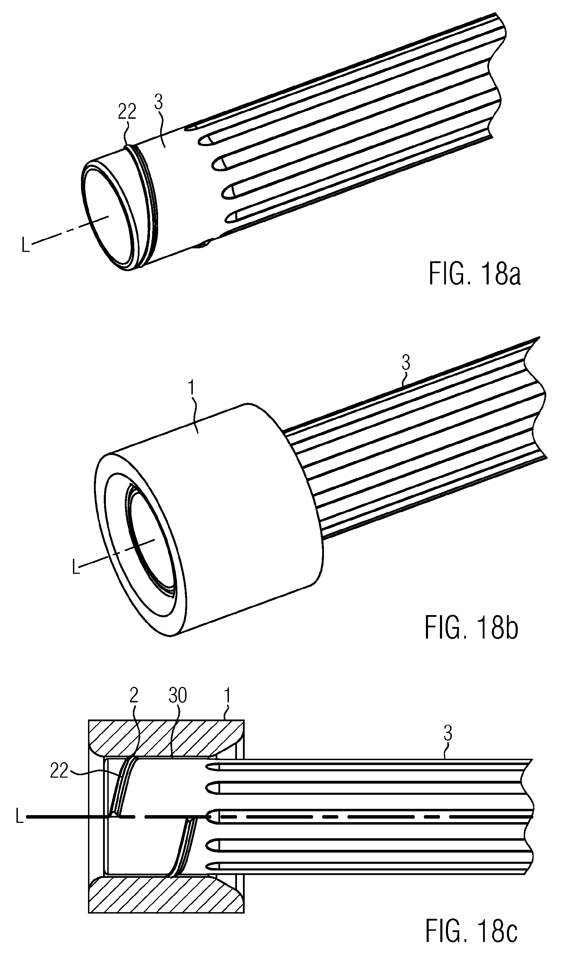

- Fig. 18a: zeigt eine perspektivische Darstellung eines weiteren Ausführungsbeispiels der vorliegenden Erfindung.
- Fig. 18b: zeigt das in Fig. 18a gezeigte Ausführungsbeispiel mit aufgesetztem Bremsring.
- Fig. 18c: zeigt einen Längsschnitt durch das in Fig. 18b gezeigte Ausführungsbeispiel.

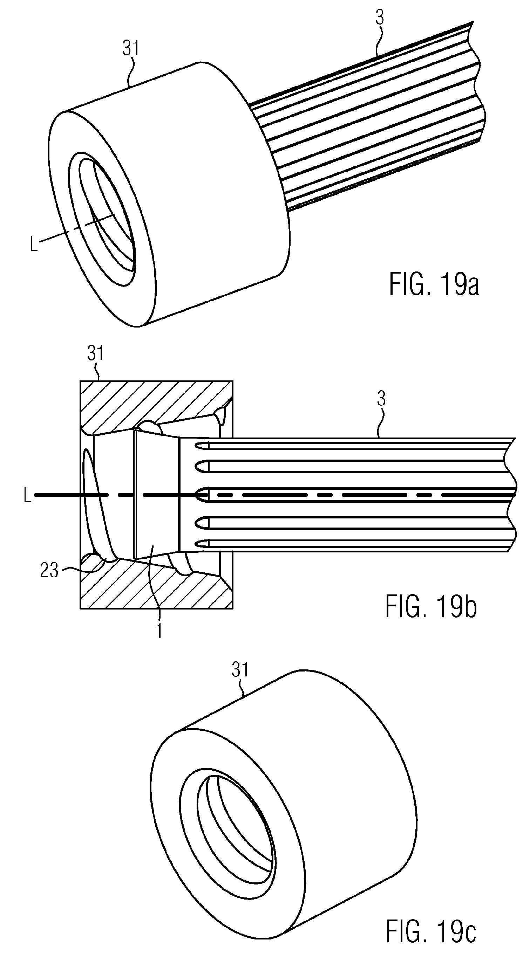

- Fig. 19a: zeigt in perspektivischer Darstellung eine weitere Ausführungsform gemäß der vorliegenden Erfindung mit an dem Füllrohr angeformtem Bremsring.
- Fig. 19b: zeigt einen Längsschnitt durch das in Fig. 19a gezeigte Ausführungsbeispiel.
- Fig. 19c: zeigt in perspektivischer Darstellung eine Hülse.

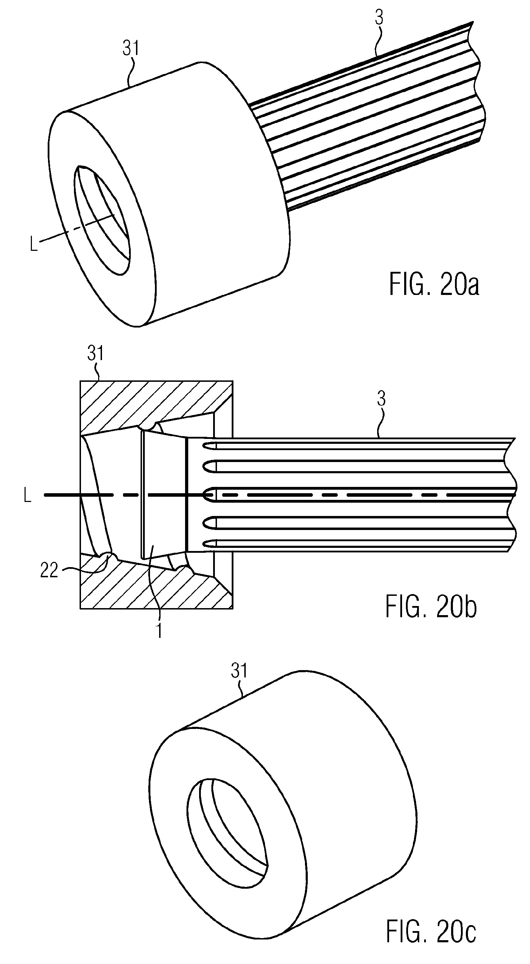

- Fig. 20a: zeigt eine perspektivische Darstellung eines weiteren Ausführungsbeispiels der vorliegenden Erfindung, bei dem der Bremsring an das Füllrohr angeformt ist.
- Fig. 20b: zeigt das in Fig. 20a gezeigte Ausführungsbeispiel in einem Längsschnitt.
- Fig. 20c: zeigt in perspektivischer Darstellung die Hülse.

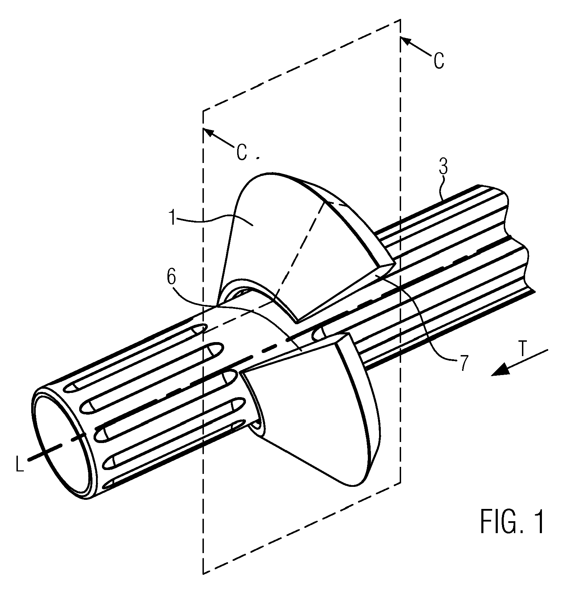

Fig. 1 zeigt in perspektivischer Darstellung eine erste Ausführungsform eines Bremsrings 1 gemäß der vorliegenden Erfindung. Mit 3 ist ein Füllrohr bezeichnet, über das in bekannter Weise pastöse Masse in eine Wursthülle 11 gefördert werden soll, wobei im Betrieb die hier nicht dargestellte Wursthülle über das Füllrohr 3 gezogen ist. Das Füllrohr 3 wird über einen in Fig. 14 dargestellten Trichter 13 und ein Förderwerk 17 portionsweise oder kontinuierlich mit pastöser Masse beschickt, wie allgemein bekannt ist und hier nicht näher erläutert wird.

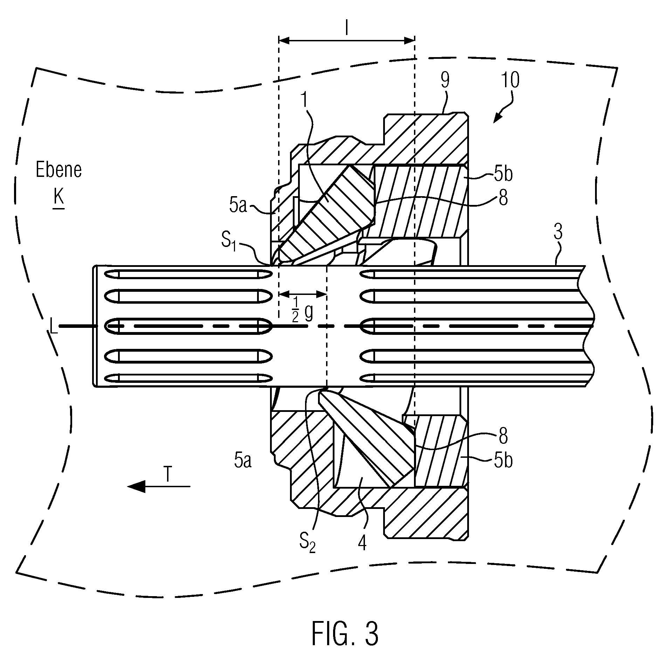

Bei der maschinellen Wurstproduktion wird zunächst die Wursthülle 11 auf das Füllrohr 3 z.B. über sein freies Ende 3a aufgebracht. Dann wird in bekannter Weise die Wursthüllenbremse 10 (siehe Fig. 3) auf dem Füllrohr 3 positioniert. Die Wursthüllenbremse 10 kann in Transportrichtung T der Wursthülle an unterschiedlichen Stellen positioniert werden. (Die Wursthülle ist hier einfachheitshalber nicht dargestellt, siehe hierzu auch Fig. 13, die die Wursthülle zeigt).

Das Füllrohr 3 kann je nach Ausführungsform beispielsweise drehbar gelagert sein und über einen nicht dargestellten Antrieb um seine Längsachse L angetrieben werden, vorzugsweise mit variabler Drehzahl.

Zur besseren Darstellung ist in Fig. 1 lediglich der Bremsring 1 auf dem Füllrohr 3 dargestellt.

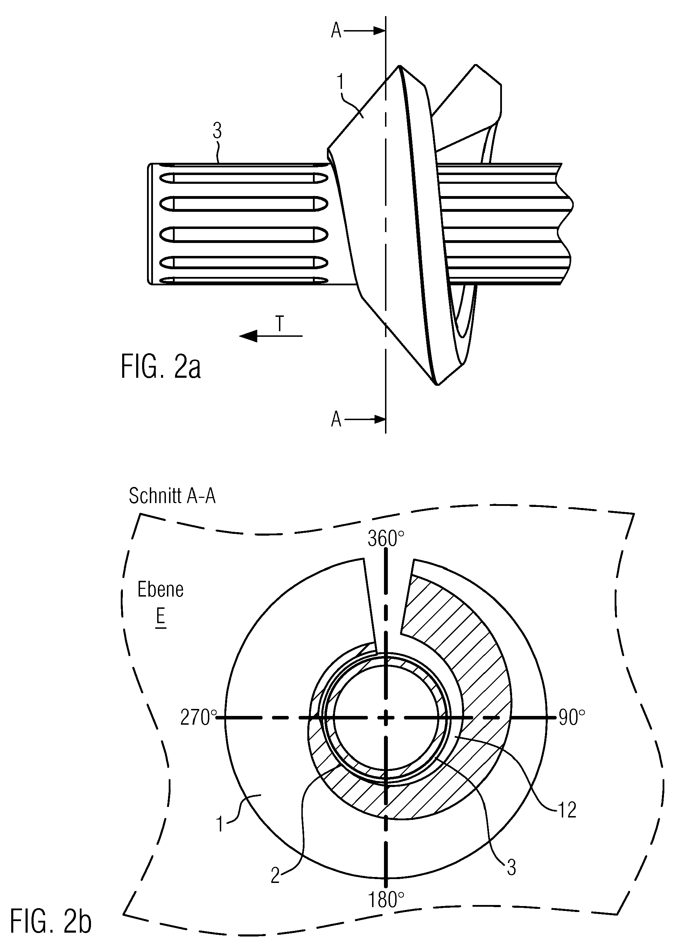

Der Bremsring 1 dient dazu, die Wursthülle auf das Füllrohr 3 zu drücken und die Wursthülle beim Befüllen zu bremsen, wie auch zuvor bereits im Zusammenhang mit dem Stand der Technik näher beschrieben wurde. Der Bremsring 1 windet sich um das Füllrohr 3, und weist eine offene, nicht geschlossene Form auf. Der Bremsring weist daher eine offenliegende Anfangsfläche 6 und eine offenliegende Endfläche 7 auf, wobei die Anfangsfläche 6 in Transportrichtung hinter der Endfläche 7 angeordnet ist. Bei diesem speziellen Ausführungsbeispiel weist ein Schnitt (Schnittebene K enthält die Längsachse L) durch den Bremsring 1, d.h. z.B. ein Schnitt entlang der Linie C-C eine im Wesentlichen sich konisch erweiternde Form auf und drückt hier mit seiner Bremslippe mit der entsprechenden Bremsfläche 2 auf das Füllrohr 3 (siehe Fig. 2a oder Fig.3). Der Bremsring 1 weist weiter eine Außenfläche 8 an seinem breiteren Ende auf, auf das, wie nachfolgend noch erläutert wird, ein Verspannmittel 5 auf den Bremsring drücken kann. Der Bremsring ist aus einem elastischen Material, insbesondere einem Material der Gruppe der Elastomere ausgebildet. Der Bremsring 1 ist so ausgebildet, dass, wie insbesondere aus Fig. 1-3, insbesondere Fig. 1 und 2b deutlich wird, er in einer Ebene E senkrecht zur Füllrohrlängsachse L die Bremsfläche 2, d.h. hier die Bremslippe, nur an einem Teil des Umfangs des Füllrohrs 3 anliegt. Fig. 2a zeigt einen Schnitt durch den Bremsring, wobei die Schnittebene die Längsachse L enthält. Ein Schnitt entlang der Linie A-A senkrecht zur Längsachse zeigt, dass der Bremsring nur partiell an dem Füllrohr 3 anliegt. Wie aus Fig. 2b hervorgeht, entspricht der gesamte Umfang des Füllrohrs 360°. In dem im Schnitt dargestellten freien Bereich 12 kann beispielsweise ein überlappter Bereich eines überlappten Saitlings beim Befüllen der Wursthülle ungehindert weiter abgezogen werden. Im Stand der Technik hat der Bremsring den gesamten Umfang des Füllrohrs umschlossen.

In diesem konkreten Ausführungsbeispiel weist der Bremsring 1 eine Spiralform d.h. Helixform auf. Die Ganghöhe g der Spirale, also diejenige Strecke, um die sich die Spirale bei einer vollen Umdrehung (360°) in einer Richtung der Füllrohrlängsachse L windet, liegt in einem Bereich von > 0 mm bis 30 mm, in diesem konkreten Ausführungsbeispiel bei 10 mm. In Fig. 3 ist ½ g dargestellt. Die Spirale liegt nicht am gesamten Umfang an (keine vollständige Umdrehung), so dass als Ganghöhe der theoretische Wert angenommen wird, den die Teilspirale beim Anliegen am gesamten Umfang von 360°(vollständige Umdrehung) aufweisen würde. Auf der Grundlage der Ganghöhe ergibt sich dann auch für diese Teilspirale die entsprechende Steigung.

Dabei kann die Spirale derart ausgelegt sein, dass sich die Spirale in nicht eingebautem Zustand um den Mantel eines Zylinders windet, dessen Durchmesser ≦ dem Durchmesser des Füllrohrs 3 ist. Wenn wie in Fig. 3 dargestellt ist, ein Verspannmittel zum Einstellen der Bremskraft vorgesehen ist, kann der Durchmesser auch größer als der Füllrohrdurchmesser sein. Die Spirale muss jedoch keine exakt mathematische Spirale sein, die eine konstante Steigung aufweist. Wesentlich ist nur, wie zuvor erläutert, dass die Bremsfläche 2 bzw. die Bremslippe in einer Ebene E senkrecht zur Längsachse nur partiell am Umfang der Wursthülle auf dem Füllrohr anliegt, so dass z.B., wie aus Fig. 3 hervorgeht, in einer Ebene K, die der Bildebene in Fig. 3 entspricht und die die Füllrohrlängsachse L enthält, auf gegenüberliegenden Seiten des Füllrohrs die Bremsfläche 2 an in Längsrichtung, d.h. in Transportrichtung T an zueinander versetzten Stellen S1, S2 anliegt. Bei einem Füllrohr mit in Längsrichtung angeordneten Rillen in der Oberfläche die dem Bremsring zugewandt ist, ist der Bremsring derart ausgebildet, dass die Bremsfläche in der Ebene E nur an einem Teil der virtuellen Einhüllenden der Füllrohroberfläche anliegt. Somit kann sich die Bremskraft, die die Bremsfläche 2 auf die Oberfläche der Wursthülle 11 auf dem Füllrohr ausübt, in einer Richtung entlang der Füllrohrlängsachse L verteilt werden. Wie stark insgesamt die Wursthülle gebremst wird, hängt dann auch maßgeblich davon ab, wie weit der Bremsring den Umfangsbereich der Wursthülle bzw. des Füllrohrs überdeckt, wenn man den Bremsring bzw. die Bremsfläche in eine Ebene projiziert. Bei dem in den Fig. 1 bis 3 gezeigten Ausführungsbeispiel überdeckt der Bremsring einen Umfangsbereich von < 360°, d.h. er umschließt nicht den ganzen Umfang und die Punkte 6a und 6b der Bremsfläche, die hier die Spitzen der Bremslippe sind, liegen nicht auf einer Linie parallel zur Längsachse L sondern sind beabstandet. In Fig. 3 ist die Wursthüllenbremse gemäß der vorliegenden Erfindung, in der der in Fig. 1 und 2 gezeigte Bremsring 1 eingesetzt ist, näher dargestellt. Fig. 3 ist ein Längsschnitt der Bremse.

Der Bremsring 1 ist mit seiner Bremslippe schräg nach Innen zum Füllrohr 3 gerichtet und in einer Bremsringhalterung 4 aufgenommen, die den Bremsring im Bremsringgehäuse hält. Da nun der Bremsring kein zur Füllrohrlängsachse L symmetrischer Ring mehr ist, muss nun auch die Bremsringhalterung 4 entsprechend unsymmetrisch zur Füllrohrlängsachse L ausgebildet sein, um den Bremsring zu halten. In einfacher Art und Weise kann eine Bremsringhalterung eine einfache Aussparung oder Nut sein, in die der Bremsring eingepasst und gehalten ist. Die Bremskraft kann dann über die Auswahl des Materials und den Durchmesser des Zylinders, um den sich der spiralförmige Bremsring windet, eingestellt werden, wobei der Durchmesser des Zylinders der zylindrischen Spirale <, oder = oder > dem Durchmesser des Füllrohrs 3 ist.

Bei diesem in Fig. 3 gezeigten Ausführungsbeispiel umfasst die Bremsringhalterung eine Verspanneinrichtung 5 mit zwei Verspannmitteln 5a,b. Der Bremsring 1 weist an seinem breiteten Ende die Fläche 8 auf, an der das Verspannmittel 5b zu liegen kommt. Der zum Füllrohr 3 hin gerichtete Abschnitt des Bremsrings ist an einem zweiten Verspannmittel 5a abgestützt. Der Abstand der Verspannmittel 5a,b zueinander ist verstellbar, beispielsweise indem die Mittel 5a, 5b axial gegeneinander verschiebbar sind oder aber beispielsweise in Schalen angeordnet sind, die ineinander eingeschraubt werden können. Diverse Mechanismen sind beispielsweise in der EP 0247462 offenbart und werden hier nicht näher erläutert. Da sich bei der Erfindung nun der Bremsring in einer Richtung der Längsachse des Füllrohrs L windet, muss nun auch die Verspanneinrichtung 5 entsprechend ausgebildet sein. Die Verspannmittel 5a, 5b sind somit nicht mehr rotationssymmetrisch zur Längsachse L. So hat beispielsweise das Verspannmittel 5b in Fig. 3 im oberen Bereich eine größere Abmessung in Richtung der Füllrohrlängsachse L als im unteren Bereich. Das Verspannmittel 5b muss so ausgebildet sein, dass es an der entsprechenden Fläche 8 ansetzt, wobei die gesamte Fläche 8 des Bremsrings auf die das Verspannmittel 5b drückt, nicht in einer Ebene liegt, entsprechendes gilt für das Verspannmittel 5a, das den Bremsring 1 entsprechend abstützt. Auch dieses Verspannmittel 5a ist nicht symmetrisch zur Längsachse L ausgebildet.

Die Spirale kann entweder links- oder rechtsgängig sein.

Die Wursthüllenbremse 10 kann auch noch einen Antrieb umfassen, über den der Bremsring in seiner Halterung 4 bzw. den Verspannmitteln 5a,b, insbesondere mit einer variablen Drehzahl mit dem Bremsringgehäuse 9 in einer nicht dargestellten Lagerung gedreht werden kann. Wird beim Abdrehvorgang die Wursthüllenbremse 10 mit spiralförmigem Bremsring mit einer Drehzahl angetrieben, die von der Drehzahl des Füllrohrs 3 abweicht, so entstehen andere Reibverhältnisse, die das Durchrutschen der überlappten Stellen begünstigen.

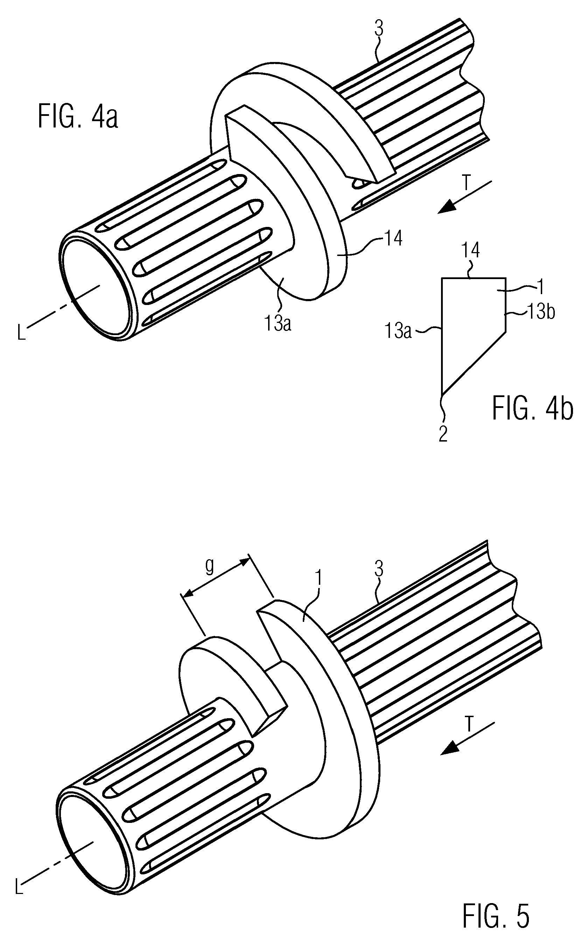

Fig. 4a zeigt eine weitere Ausführungsform gemäß der vorliegenden Erfindung, die vom Prinzip her der Ausführungsform, wie sie im Zusammenhang mit den Fig. 1-3 beschrieben wurde, entspricht. In Fig. 4a ist der Bremsring 1 ebenfalls spiralförmig ausgebildet und windet sich um das Füllrohr 3, hier allerdings mit der Überdeckung > 360°, d.h. der Bremsring schlingt sich mehr als einmal um die Oberfläche des Füllrohrs 3. Hier ist die Überdeckung beispielsweise 400°. Die Ganghöhe entspricht z.B. dem in Fig. 1-3 gezeigten Ausführungsbeispiel. Die Spirale kann wieder rechts- oder linksgängig ausgebildet sein. Im Unterschied zu dem in Fig. 1-3 gezeigten Ausführungsbeispiel muss hier die Bremskraft nicht über eine entsprechende Verspanneinrichtung 5 eingestellt werden, so dass der Bremsring 1 in einer einfachen Aussparung, beispielsweise Nut, eingepasst und gehalten werden kann. Wie der Querschnitt durch den Bremsring 1 in Fig. 4b zeigt, kann auch dieser Bremsring eine Bremslippe aufweisen, derart, dass die Bremsfläche 2, die in Berührung mit dem Füllrohr 3 kommt, möglichst gering ist. Die Bremskraft wird hier, wie auch zuvor beschrieben, über das Material und den Durchmesser des Zylinders, um den sich die Spirale in nicht eingebautem Zustand windet, definiert und fest eingestellt. Der Bremsring 1 weist hier im Querschnitt auch zwei gegenüberliegende ebene Seitenwandungen 13a und 13b auf sowie eine in Bezug zur Mittelachse des Bremsrings bzw. der Füllrohrlängsachse L nach außen gewandte Fläche 14. Dadurch, dass keine zusätzlichen Verspannmittel notwendig sind, kann die Wursthüllenbremse wesentlich vereinfacht werden.

Das in Fig. 5 gezeigte Ausführungsbeispiel entspricht dem in Fig. 4a und Fig. 4b gezeigten Ausführungsbeispiel mit der Ausnahme, dass hier die Spirale linksdrehend ist.

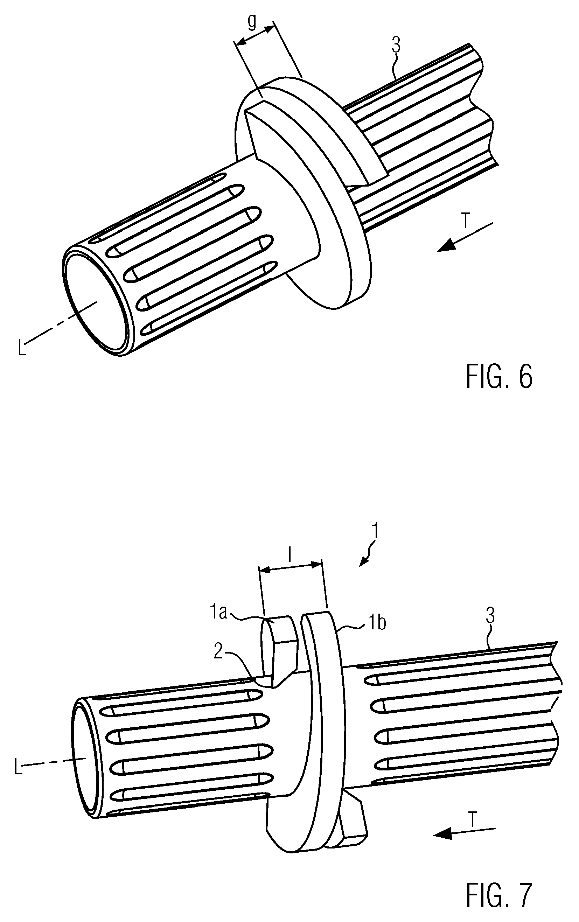

Das in Fig. 6 gezeigte Ausführungsbeispiel entspricht dem in Fig. 4 gezeigten Ausführungsbeispiel einer rechtsgängigen Spirale, wobei hier jedoch die Ganghöhe g kleiner ist, beispielsweise 6 mm.

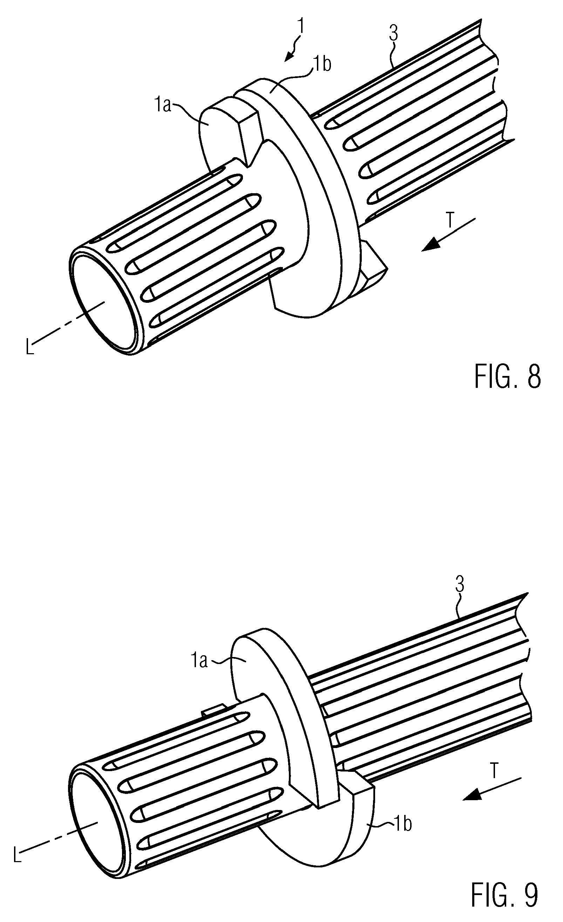

Fig. 7 und 8 zeigen eine weitere mögliche Ausführungsform der vorliegenden Erfindung. Auch dieses Ausführungsbeispiel entspricht den vorherigen Ausführungsbeispielen, jedoch ist hier der Bremsring 1 nicht einteilig als offener Bremsring ausgebildet sondern mehrteilig, insbesondere zweiteilig, ausgebildet. Die Abschnitte 1 a,b sind gegenüberliegend angeordnet.

Die jeweiligen Spiralabschnitte decken jeweils nur einen Bereich des Umfangs ab, hier größer als 180 °, jedoch kleiner als 360 °. Die Spirale macht keine vollständige Umdrehung, so dass als Ganghöhe der theoretische Wert angenommen wird, den die Teilspirale bei einer vollen Umdrehung von 360° aufweisen würde. Auf der Grundlage der Ganghöhe ergibt sich dann auch für diese Teilspirale die entsprechende Steigung.

Eine entsprechende Wursthüllenbremse 10 ist an die mehrteilige Ausgestaltung des Bremsrings 1 angepasst. Auch hier kann, wie im Zusammenhang mit den Fig. 4-6 beschrieben wurde, der Bremsring so gebildet sein, dass die Bremskraft nicht extra eingestellt werden muss, sondern beispielsweise über den Durchmesser des Zylinders, um den sich die Spirale bzw. Teilspirale windet (in nicht eingebauten Zustand) und das Material eingestellt werden. Die beiden Spiralabschnitte 1 a,b überkreuzen sich, wie aus Fig. 7 und 8 hervorgeht, d.h. eine in einem oberen Bereich des Füllrohrs angeordnete offene Seite des ersten Spiralabschnitts 1 a liegt in Transportrichtung T hinter einem auf dieser Seite angeordneten offenen Ende des Spiralabschnitts 1 b, während auf der gegenüberliegenden Seite des Füllrohrs ein zweites freies offenes Ende des ersten Spiralabschnitts 1 a in Transportrichtung vor dem zweiten offenen Ende des zweiten Spiralabschnitts 1 b liegt. Diese Anordnung ist besonders platzsparend. Dieses Ausführungsbeispiel kann jedoch auch so gestaltet sein, dass die Bremskraft mittels einer Verspanneinrichtung einstellbar ist.

Die Fig. 9 -11 zeigen in verschiedenen Perspektiven ebenfalls einen Bremsring 1, der aus mehreren spiralförmigen Teilen 1 a,b gebildet ist. Wie auch im Zusammenhang mit den Fig. 7 und 8 erläutert, liegen hier die beiden Spiralabschnitte schräg gegenüber. Der Unterschied zu dem Ausführungsbeispiel, das in den Fig. 7 und 8 gezeigt ist, liegt darin, dass die beiden Spiralabschnitte eine Überdeckung der Oberfläche von ≦ 180° haben, hier 180 °. Fig. 11 a ist eine Seitenansicht der beiden Spiralabschnitte 1 a,b des Bremsrings 1. Wie aus Fig. 11a ersichtlich ist, überkreuzen sich die beiden Abschnitte 1 a,b, d.h. eine in einem oberen Bereich des Füllrohrs angeordnete offene Seite des ersten Spiralabschnitts 1 a liegt in Transportrichtung hinter einem auf dieser Seite angeordneten offenen Ende des Spiralabschnitts 1 b, während auf der gegenüberliegenden Seite des Füllrohrs ein zweites freies offenes Ende des ersten Spiralabschnitts 1 a in Transportrichtung vor dem zweiten offenen Ende des zweiten Spiralabschnitts 1 b liegt. Fig. 11c ist ein Schnitt entlang der Linie B-B, d.h. es zeigt eine Ebene E, die senkrecht zur Längsachse L liegt. Wie aus Fig. 11c deutlich wird, so liegt der Bremsring 1 hier nur partiell am Füllrohr 3 (bzw. im Betrieb an der dazwischenliegenden Wursthülle), hier an zwei Stellen 2a, 2b an.

Der Vorteil des mehrteilig ausgebildeten Bremsrings 1 mit gegenüberliegenden Abschnitten ist, dass die Wursthülle von zwei Seiten her gestützt werden kann, ohne dass jedoch in einer Ebene zu viel Kraft auf die Wursthülle wirkt.

In den Fig. 12a-d ist eine weitere Ausführungsform gemäß der vorliegenden Erfindung gezeigt. Bei dieser Ausführungsform handelt es sich um einen geschlossenen Bremsring, wie insbesondere aus Fig. 12d hervorgeht, der hier ebenso wie bei dem in Fig. 1 gezeigten Ausführungsbeispiel, einen Durchmesser aufweist, der sich in eine Richtung, hier entgegen der Transportrichtung, erweitert. Wie aus Fig. 12d hervorgeht, ist der kleinste Durchmesser i des geschlossenen Bremsrings an dessen Hinterseite größer als der Füllrohrdurchmesser derart, dass der Bremsring 1 auf dem Füllrohr schräggestellt werden kann, wie insbesondere aus Fig. 12a und 12b hervorgeht. Das bedeutet, dass die Ebene V, die durch die ringförmige Bremsfläche 2 aufgespannt wird, zu einer Ebene W, die senkrecht zur Füllrohrachse L verläuft, geneigt ist, insbesondere um einen Winkel von > 0°bis 30°, hier um 15°. Durch die schräge Anordnung, wie aus den Fig. 12a, 12b und 12c gezeigt ist, ergeben sich aufgrund der ellipsenförmigen Berührung der Bremsfläche 2 unterschiedlich starke Anpresskräfte und Reibverhältnisse, wodurch die überlappten Stellen den Bremsring besser passieren können. Darüber hinaus gilt, wie für alle anderen Ausführungsformen auch, dass der Bremsring so ausgebildet ist, dass er sich derart um das Füllrohr erstreckt bzw. windet, dass in einer Ebene senkrecht zur Füllrohrlängsachse die Bremsfläche nur an einem Teil des Umfangs des Füllrohrs anliegt. Somit ergibt sich bei der geschlossenen Ausführungsform ebenso wie bei der offenen Ausführungsform eine Verteilung der Bremskraft in Längsrichtung, d.h. entlang der Füllrohrlängsachse L. Es ist auch möglich, mehrere schräg hintereinander angeordnete Bremsringe mit gleicher Ausrichtung der Schräglage oder aber mit entgegengesetzter Ausrichtung der Schräglage in der Wursthüllenbremse vorzusehen. Eine Wursthüllenbremse weist dann eine entsprechende Bremsringhalterung auf. Bei dem in Fig. 12a-d gezeigten Ausführungsbeispiel ist es auch möglich, eine Bremsringhalterung mit einer Verspanneinrichtung vorzusehen, die einen zusätzlichen Druck auf den Bremsring ausübt.

Wenn auch nicht dargestellt, ist es gemäß der vorliegenden Erfindung auch möglich, beispielsweise einen Bremsring 1 vorzusehen, der aus mehreren Abschnitten gebildet ist, die in Transportrichtung T betrachtet, hintereinander um die Füllrohrlängsachse L beabstandet voneinander angeordnet sind. Es ist auch möglich, einen Bremsring vorzusehen, der senkrecht zur Längsachse L angeordnet ist (beispielsweise wäre dann die Ebene V parallel zur Ebene D, wie in Fig. 12d gezeigt ist) bei dem ein Bereich der Bremslippe "ausgeschliffen", d.h. entfernt ist, so dass der Bremsring nicht vollständig am Füllrohr anliegt. Der ausgesparte Bereich kann eine Größe von 100° bis 260° aufweisen.

Einem entsprechenden Bremsringteil kann dann ein zweites Bremsringteil nachgeordnet werden, bei dem ebenfalls die Bremslippe in einem bestimmten Bereich entfernt, insbesondere ausgeschliffen wurde. Vorzugsweise befindet sich der entfernte Bereich des zweiten Bremsringteils auf einer im ersten entfernten Teil gegenüberliegenden Seite.

In Fig. 15a und b ist eine weitere mögliche Ausführungsform der vorliegenden Erfindung gezeigt. Gemäß diesem weiteren Ausführungsbeispiel weist das Füllrohr 3 über den Umfang verteilte Längsrillen 21 auf, wobei der Bremsring 1 zumindest teilweise auf diesen Längsrillen 21 aufliegt. Der Bremsring kann dabei, wie in den vorherigen Ausführungsbeispielen näher definiert ist, ausgebildet sein. Durch die Längsrillen 21 in der Oberfläche des Füllrohrs 3 kommt es zusätzlich weiter zu einer Reduzierung der Bremsfläche 20, die auf das Füllrohr 3 bzw. der hier nicht dargestellten dazwischenliegenden Wursthülle wirkt. Somit kann die Bremskraft um den Umfang des Füllrohrs 3 weiter reduziert werden.

Wie bei den vorhergehenden Ausführungsbeispielen ist der Bremsring 1 derart ausgestaltet, dass sich die Bremsfläche 2 so erstrecken kann, dass in einer Ebene E senkrecht zur Füllrohrlängsachse die Bremsfläche des Bremsrings 1 nur auf einen Teil des Umfangs der Wursthülle 11 bzw. des Füllrohrs 3 drückt.

Fig. 16a, b, c und d zeigen eine weitere Ausführungsform, bei der das Füllrohr 3 derart ausgebildet ist, dass die Bremsfläche in einer Ebene E nicht am gesamten Umfang anliegt. Wie am besten aus Fig. 16a, c und d hervorgeht, weist dieses Ausführungsbeispiel einen geschlossenen Bremsring 1 auf. Hier ist der Bremsring 1 beispielsweise, wie im Zusammenhang mit den Fig. 12a-d beschrieben, aufgebaut, wobei der Innendurchmesser des Bremsrings in Transportrichtung abnimmt, d.h., dass die Innenfläche des Bremsrings konisch in Transportrichtung zuläuft. Im Gegensatz zu dem in Fig. 12 gezeigten Ausführungsbeispiel kann, aber muss der Bremsring 1 nicht geneigt sein, sondern es ist auch möglich, dass die ringförmige Bremsfläche 2 eine Ebene V aufspannt, die senkrecht zur Füllrohrlängsachse L verläuft. Der Bremsring 1 könnte auch alternativ als geschlossener einfacher Ring mit konstantem Innendurchmesser ausgebildet sein wie nachfolgend noch in Zusammenhang mit Figur 18 näher erläutert wird. Die entsprechenden Bremsringe 1 müssen das Füllrohr 3 auch nicht ganz umschließen.

Wesentlich ist hier, dass die Füllrohroberfläche 3 zumindest in dem Bereich, in dem der Bremsring 1 anzuordnen ist, eine Erhebung 22 aufweist, die sich insbesondere um die Füllrohrlängsachse L windet, insbesondere im Wesentlichen spiral- bzw. helixförmig. Somit kann die Bremsfläche 2 nur in dem Bereich auf die Wursthülle drücken, wo der Bremsring 1 der Erhebung 22 gegenüberliegt, wie insbesondere aus Fig. 16a hervorgeht. Dabei ergeben sich die gleichen Vorteile wie zuvor beschrieben.

Das in den Fig. 17a-d beschriebene Ausführungsbeispiel entspricht dem im Zusammenhang mit Fig. 16a, b, c, d beschriebenen Ausführungsbeispiel, wobei jedoch anstatt der Erhebung 22 eine entsprechende Vertiefung 23 in der Füllrohroberfläche ausgebildet ist. Genau wie die Erhebung 22 windet sich die Vertiefung 23 vorzugsweise um die Füllrohrlängsachse L. Dabei kann die Bremsfläche 2 in dem Bereich, in dem sich der Bremsring 1 und die Aussparung 23 gegenüberliegen, nicht auf die Wursthülle bzw. das Füllrohr drücken. Die Bremsfläche 2 kann nur in Bereichen auf die Füllrohroberfläche 3 bzw. die Wursthülle drücken, wo keine Vertiefung bzw. Rille 23 angeordnet ist. Die Ausdehnung der Erhebung 22, bzw. Vertiefung 23 in Richtung L kann auch deutlich größer gestaltet sein, als in den Abbildungen dargestellt.

Das in Fig. 18a, b, c gezeigte Ausführungsbeispiel entspricht im Wesentlichen dem in Fig. 16 gezeigten Ausführungsbeispiel, wobei sich eine Erhebung 22 um die Oberfläche des Füllrohrs 3 erstreckt, insbesondere spiralförmig oder helixförmig windet. Der Bremsring 1 weist hier beispielsweise einen hohlzylindrischen Abschnitt 30 auf, wobei sich auch hier die Bremsfläche 2 um das Füllrohr 3 windet. Anstatt der Erhebung 22 kann ebenso, wie im Zusammenhang mit Fig. 17a-d beschrieben, auch eine entsprechende Vertiefung 23 auf der Füllrohroberfläche ausgebildet sein. Wenn auch nicht dargestellt, kann auch der vorzugsweise hohlzylindrische Bremsring 1 als Hülse ausgebildet sein und auf seiner Innenseite eine entsprechende Erhebung, die sich um die Füllrohrlängsachse L auf der Innenseite des Bremsrings 1 erstreckt oder eine entsprechende Vertiefung aufweisen, derart, dass sich auch hier die Bremsfläche 2 derart um die Füllrohrlängsachse erstreckt, dass senkrecht zur Füllrohrlängsachse die Bremsfläche des Bremsrings nur auf einem Teil des Umfangs der Wursthülle anliegt und sich die Bremskraft in einer Richtung entlang der Füllrohrlängsachse verteilt. Wie auch im Zusammenhang mit dem Bremsring 1 bei den zuvor beschriebenen Ausführungsbeispielen ist es vorteilhaft, wenn die Bremsfläche sich derart um die Längsachse L windet, dass sie einen Umfangsbereich von 300 bis 720° überdeckt. Auch hier gilt, dass, wenn die Bremsfläche sich spiralförmig windet, vorzugsweise eine Ganghöhe g in einem Bereich von > 0 bis 30 mm, vorzugsweise 5 bis 15 mm liegt, entsprechend den Angaben zum spiralförmigen Bremsring.

Das in Fig. 19a und 19b gezeigte Ausführungsbeispiel weist ebenfalls ein Füllrohr 3 auf, wobei dieses Ausführungsbeispiel im Wesentlichen den anderen Ausführungsbeispielen entspricht, hier jedoch der Bremsring 1 am Füllrohrende des Füllrohrs 3 angeformt, z.B. aufgespritzt, ist. Der Bremsring ist beispielsweise aus einem Elastomer gebildet. In dem Ausführungsbeispiel kann der Bremsring 1 sich konisch erweitern. Im Bereich über dem Bremsring 1 ist konzentrisch eine Hülse 31 ausgebildet. Die Innenwandung der Hülse 31 kann entweder hohlzylindrisch ausgebildet sein oder, wie in Fig. 19b dargestellt ist, sich konisch in Transportrichtung T verjüngen. Wie auch bereits zuvor beschrieben, kann hier die Hülse 31 eine Aussparung bzw. Rille 23 aufweisen, die sich vorzugsweise spiral- bzw. helixförmig um die Längsachse L des Füllrohrs 3 windet. Wie auch im Zusammenhang mit den vorherigen Ausführungsbeispielen beschrieben, kann die Hülse 31 auch eine entsprechende Erhebung 22 aufweisen, wie in Fig. 20a und 20b dargestellt ist, die sich ebenfalls an der Innenfläche der Hülse 31 um die Längsachse L windet. Somit ergeben sich auch hier die im Zusammenhang mit den vorherigen Ausführungsbeispielen genannten Vorteile. Die Hülse 31 kann beispielsweise aus Metall gefertigt werden. Die Hülse kann aber auch aus einem Elastomer gefertigt sein, wobei dann das Füllrohrende metallisch sein kann. Die Wursthülle läuft dann zwischen Bremsring 1 und Hülse 31. Die Einstellung der Bremskraft erfolgt durch axiales Verschieben der Hülse 31.

Bei dem erfindungsgemäßen Verfahren, insbesondere Betriebsverfahren, wird zunächst die Wursthülle 11 auf das Füllrohr 3 über sein freies Ende 3a aufgebracht und dann die Wursthüllenbremse 10 auf dem Füllrohr positioniert. Bei dem erfindungsgemäßen Verfahren wird als Wursthülle ein überlappter Saitling, wie in Fig. 13 dargestellt ist, verwendet, wobei jedoch auch andere nicht überlappte Wursthüllen verarbeitet werden können. Beim Befüllen wird die Wursthülle mit pastöser Masse durch das Füllrohr 3 gefüllt, wobei die pastöse Masse über ein Förderwerk 17 portionsweise oder kontinuierlich ausgestoßen wird. Beim Befüllen der Wursthülle 11 wird diese vom Füllrohr 3 gezogen. Dabei wird die Wursthülle 11 durch den Bremsring 1 der Wursthüllenbremse 10 auf das Füllrohr 3 gedrückt und somit etwas gebremst, so dass die Geschwindigkeit, mit der die Wursthülle vom Füllrohr abgezogen wird, etwas kleiner oder gleich ist als die Ausstoßgeschwindigkeit der pastösen Masse. Gemäß der vorliegenden Erfindung ist nun die Bremsfläche des Bremsring 1 derart ausgebildet, dass sie sich derart um das Füllrohr 3 erstreckt, dass in einer Ebene senkrecht zur Füllrohrlängsachse L die Bremsfläche 2 nur an einem Teil des Umfangs des Füllrohrs 3 anliegt, wie insbesondere aus der Fig. 1, 2b und 11b hervorgeht. Somit verteilt sich die Bremskraft vorzugsweise entlang der Längsachse L, was insbesondere den Naturdarm schont. Im jeweils freien Bereich 12, in dem die Bremsfläche nicht an der Wursthülle bzw. dem Darm anliegt, kann die Wursthülle ungehindert weiter abgezogen werden. So können überlappte Stellen von zwei aufeinanderfolgenden Darmstücken eines Saitlings ungehindert abgezogen werden, ohne dass die Darmteile auseinandergezogen werden. Dennoch können Lufteinschlüsse und unterfüllte Produkte wirksam verhindert werden, da insgesamt eine ausreichende Bremswirkung realisiert werden kann, da der Bremsring auch eine Erstreckung in Richtung der Längsachse des Füllrohrs aufweist.

Ist beispielsweise eine ausreichende Menge ausgestoßen, so kann zum Herstellen einer Abdrehstelle das Füllrohr zusammen mit der Wursthüllenbremse in Drehung versetzt werden. Dabei kann die Wursthüllenbremse 10 entweder zusammen mit dem Füllrohr angetrieben werden, oder aber einen eigenen Antrieb aufweisen. Vorzugsweise weist die Wursthüllenbremse 10 einen eigenen Antrieb auf. Auch eine Überlagerung der Funktionen "Brät ausstoßen" und "Wursthülle abdrehen" ist möglich.

Wenn sich die Drehzahl des Füllrohrs von der Drehzahl der Wursthüllenbremse unterscheidet, entstehen aufgrund der zur Füllrohrlängsachse L unsymmetrischen Anordnung der Bremsfläche 2, insbesondere bei spiralförmigem Bremsring und spiralförmigen Erhebungen oder Vertiefungen, andere Reibverhältnisse, die das Durchrutschen der überlappten Stelle begünstigen.

Die Drehzahlen können jedoch auch gleich eingestellt werden.

## Patentansprüche

1. Verfahren zum Herstellen von Würsten mit einer Füllmaschine (100), wobei pastöse Masse durch ein Füllrohr (3) in eine auf dem Füllrohr gerafften Wursthülle (11) ausgestoßen wird, und auf die Wursthülle (11) mittels Wursthüllenbremse (10) eine Bremskraft ausgeübt wird, indem eine Bremsfläche (2) eines Bremsrings (1) auf die Wursthülle (11) drückt, **dadurch gekennzeichnet, dass** die Wursthüllenbremse (10) einen Antrieb umfasst, über den der Bremsring (1) gedreht wird,
sich die Bremsfläche (2) derart um die Füllrohrlängsachse (L) erstreckt, dass in einer Ebene (E) senkrecht zur Füllrohrlängsachse (L) die Bremsfläche des Bremsrings (1) nur auf einen Teil des Umfangs der Wursthülle drückt, und
die Bremskraft, die die Bremsfläche auf die Oberfläche der Wursthülle (11) ausübt, in einer Richtung entlang der Füllrohrlängsachse (L) verteilt wird.

2. Verfahren nach Anspruch 1, **dadurch gekennzeichnet, dass** die Wursthüllenbremse (10) zum Herstellen einer Abdrehstelle gedreht wird, wobei die Drehzahl der Wursthüllenbremse von der Drehzahl des Füllrohrs abweicht, gleich ist oder veränderbar ist.

3. Wursthüllenbremse (10) für eine Füllmaschine (100), mit einem Bremsring (1), die eine Bremskraft auf die Wursthülle (11) ausüben kann, indem eine Bremsfläche (2) des Bremsrings (1) auf die Wursthülle drückt, **dadurch gekennzeichnet, dass** die Wursthüllenbremse (1) einen Antrieb umfasst, über den der Bremsring (1), insbesondere mit einer variablen Drehzahl, gedreht werden kann,
sich die Bremsfläche (2) derart um die Füllrohrlängsachse (L) erstreckt, dass in einer Ebene (E) senkrecht zur Füllrohrlängsachse (L) die Bremsfläche (2) des Bremsrings (1) nur auf einen Teil des Umfangs der Wursthülle drücken kann, und die Bremskraft, die die Bremsfläche auf die Oberfläche der Wursthülle (11) ausübt, in einer Richtung entlang der Füllrohrlängsachse (L) verteilt wird.

4. Wursthüllenbremse (10) nach Anspruch 3, **dadurch gekennzeichnet, dass** die Bremsfläche des Bremsrings (1) sich in einer Richtung entlang der Füllrohrlängsachse (L) zumindest um einen Teil des Umfangs des Füllrohrs (3) windet, so dass es insbesondere eine Ebene (K) gibt, die die Füllrohrlängsachse (L) enthält, und in der die Bremsfläche (2) an gegenüberliegenden Seiten der Füllrohrlängsachse (L) an in Längsrichtung zueinander versetzten Stellen (S₁; S₂) anliegt.

5. Wursthüllenbremse (10) nach mindestens einem der vorhergehenden Ansprüche, **dadurch gekennzeichnet; dass** der Bremsring (1) einen Umfangsbereich des Füllrohrs (3) von **300°** bis **720°** überdeckt.

6. Wursthüllenbremse (10) nach mindestens einem der Ansprüche 3 bis 5, **dadurch gekennzeichnet, dass** die Bremsfläche (2) des Bremsrings (1) sich im Wesentlichen spiralförmig um das Füllrohr (3) windet.

7. Wursthüllenbremse (10) nach mindestens Anspruch 6, **dadurch gekennzeichnet, dass** die Ganghöhe g der Spirale in einem Bereich von > **0 mm** bis **30 mm,** insbesondere **5 mm** bis **15** mm liegt.

8. Wursthüllenbremse (10) nach mindestens einem der Ansprüche 3 bis 7, **dadurch gekennzeichnet, dass** der Bremsring (1) mehrteilig ausgebildet ist, und vorzugsweise mindestens zwei Spiralabschnitte (1a, b) umfasst.

9. Wursthüllenbremse (10) nach mindestens einem der Ansprüche 3 bis 7, **dadurch gekennzeichnet, dass** der Bremsring (1) aus einem elastischen Material, insbesondere aus einem Material der Gruppe der Elastomere ausgebildet ist.

10. Wursthüllenbremse (10) nach einem der Ansprüche 3-9, **dadurch gekennzeichnet, dass** die Bremsfläche (2) unsymmetrisch zur Füllrohrlängsachse (L) verläuft.

11. Wursthüllenbremse (10) nach einem der Ansprüche 3-10, **dadurch gekennzeichnet, dass** der Bremsring (1) derart angeordnet ist, dass er sich um das Füllrohr (3) derart erstrecken kann, dass die Bremsfläche (2) auf die Füllrohroberfläche drücken kann.

12. Wursthüllenbremse nach einem der Ansprüche 3 bis 11, **dadurch gekennzeichnet, dass** die Wursthüllenbremse eine Bremsringhalterung (4) umfasst, die unsymmetrisch zur Füllrohrlängsachse (L) ausgebildet ist, und insbesondere eine Verspanneinrichtung (5) aufweist, die eine veränderbare Kraft auf den Bremsring (1) ausübt, derart, dass die Bremskraft verstellbar ist, und die Verspanneinrichtung (5) zwei Verspannmittel (5a, 5b) umfasst, zwischen denen der Bremsring (1) angeordnet ist, wobei die Verspannmittel (5a, 5b) jeweils nicht symmetrisch zur Füllrohrlängsachse (L) ausgebildet sind.

13. Wursthüllenbremse (10) nach mindestens einem der Ansprüche 3 bis 12, **dadurch gekennzeichnet, dass** der Bremsring (1) geschlossen ist und die Ebene, in der die Bremsfläche (2) liegt, zu einer Ebene, die senkrecht zur Füllrohrlängsachse (L) steht, um 10° bis 45° geneigt ist.

14. Wursthüllenbremse nach Anspruch 3 oder 10, **dadurch gekennzeichnet, dass** der Bremsring (1) an einem Füllrohrende angeformt ist und die Bremsfläche (2) gegen eine um den Bremsring angeordnete Fläche (31), insbesondere einer Hülse, drückt, wobei insbesondere entweder
der Bremsring (1) eine sich um die Füllrohrlängsachse (L) windende Erhebung (22) aufweist, oder eine sich um die Füllrohrlängsachse (L) windende Vertiefung (23), oder
die umgebende Fläche (31), insbesondere die Hülse, eine sich um die Füllrohrlängsachse (L) windende Erhebung aufweist oder eine sich um die Füllrohrlängsachse windende Vertiefung.

15. Wursthüllenbremse (10) nach mindestens einem der Ansprüche 3-9, **dadurch gekennzeichnet, dass** der Bremsring (1) als Hülse ausgebildet ist, an deren Innenfläche eine Erhebung (22) oder Vertiefung (23) ausgebildet ist, die sich um die Füllrohrlängsachse windet.

16. Füllmaschine zum Befüllen von Wursthülle mit pastöser Masse mit einem Füllrohr (3) sowie mit einer Wursthüllenbremse (10) nach mindestens einem der Ansprüche 3 bis 15, wobei sich die Bremsfläche (2) des Bremsrings (1) derart um die Füllrohrlängsachse (L) erstreckt, dass in einer Ebene (E) senkrecht zur Füllrohrlängsachse (L) die Bremsfläche (2) des Bremsrings (1) nur auf einen Teil des Umfangs der Wursthülle drücken kann, wobei die Wursthüllenbremse (1) einen Antrieb umfasst, über den der Bremsring (1), insbesondere mit einer variablen Drehzahl, gedreht werden kann.

17. Füllmaschine nach Anspruch 16, **dadurch gekennzeichnet, dass** entweder
- sich der Bremsring (1) um die Füllrohrlängsachse (L) windet oder
- entweder die Oberfläche, des Füllrohrs (3) oder die dem Füllrohr zugewandte Oberfläche des Bremsrings (1) eine Erhebung (22) oder Vertiefung (23) aufweist, die sich vorzugsweise um die Füllrohrlängsachse (L) windet oder
- die Oberfläche des Bremsrings (1) oder eine um den Bremsring angeordnete Fläche (31), insbesondere Hülse, eine Erhebung (22) oder Vertiefung (23) aufweist, die sich vorzugsweise um die Füllrohrlängsachse (L) windet.

18. Füllmaschine nach mindestens einem der Ansprüche 16 bis 17, **dadurch gekennzeichnet, dass** in der Ebene (E) betrachtet mindestens ein freier Abschnitt (12) entsteht, durch den eine Wursthülle ungebremst geführt werden kann, wobei sich der mindestens eine Abschnitt in der Ebene (E) über mindestens 20° des Umfangs des Füllrohrs erstreckt.

## Claims

1. A method for manufacturing sausages with a filling machine (100), wherein pasty mass is ejected through a filling tube (3) into a sausage casing (11) ruffled on the filling tube, and a brake force is exerted on the sausage casing (11) by means of a sausage casing brake (10) by a braking area (2) of a brake ring (1) pressing onto the sausage casing (11), **characterized in that** the sausage casing brake (1) comprises a drive via which the brake ring (1) is rotated,
the braking area (2) extends around the longitudinal axis of the filling tube (L) in such a manner that in a plane (E) perpendicular to the longitudinal axis of the filling tube (L), the braking area of the brake ring (1) only presses onto a part of the circumference of the sausage casing, and the brake force the braking area exerts on the surface of the sausage casing (11) is distributed in a direction along the longitudinal axis of the filling tube (L).

2. The method according to claim 1, **characterized in that** the sausage casing brake (10) is rotated to create a wring-off point, the speed of the sausage casing brake differing from or being equal to the speed of the filling tube, or being variable.

3. Sausage casing brake (10) for a filling machine (100) with a brake ring (1), which may exert a brake force on the sausage casing (11) by a braking area (2) of a brake ring (1) pressing onto the sausage casing, **characterized in that**
the sausage casing brake (1) comprises a drive via which the brake ring (1) may be rotated, in particular at variable speeds,
the braking area (2) extends around the longitudinal axis of the filling tube (L) such that in a plane (E) perpendicular to the longitudinal axis of the filling tube (L), the braking area (2) of the brake ring (1) may only press onto a part of the circumference of the sausage casing, and the brake force the braking area exerts on the surface of the sausage casing (11) is distributed in a direction along the longitudinal axis of the filling tube (L).

4. Sausage casing brake (10) according to claim 3 , **characterized in that** the braking area of the brake ring (1) winds in a direction along the longitudinal axis of the filling tube (L) at least around a part of the circumference of the filling tube (3), so that there is in particular a plane (K) which contains the longitudinal axis of the filling tube (L) and in which the braking area (2) lies against points (S₁; S₂) staggered with respect to each other in the longitudinal direction at opposed sides of the longitudinal axis of the filling tube (L).

5. Sausage casing brake (10) according to at least one of the preceding claims **characterized in that** the brake ring (1) overlaps a circumferential area of the filling tube (3) of **300°** to **720°.**

6. Sausage casing brake (10) according to at least one of claims 3 to 5, **characterized in that** the braking area (2) of the brake ring (1) essentially winds spirally around the filling tube (3).

7. Sausage casing brake (10) according to at least claim 6, **characterized in that** the lead g of the spiral is within a range of > **0 mm** to **30 mm,** in particular **5 mm** to **15 mm.**

8. Sausage casing brake (10) according to at least one of claims 3 to 7, **characterized in that** the brake ring (1) has a multi-piece design and preferably comprises at least two spiral sections (1a, b).

9. Sausage casing brake (10) according to at least one of claims 3 to 7, **characterized in that** the brake ring (1) is formed of an elastic material, in particular a material of the group of elastomers.

10. Sausage casing brake (10) according to one of claims 3 - 9, **characterized in that** the braking area (2) extends asymmetrically to the longitudinal axis of the filling tube (L).

11. Sausage casing brake (10) according to one of claims 3 - 10, **characterized in that** the brake ring (1) is arranged such that it may extend around the filling tube (3) such that the braking area (2) may press onto the filling tube surface.

12. Sausage casing brake according to one of claims 3 to 11, **characterized in that** the sausage casing brake comprises a brake ring retainer (4) which is embodied to be asymmetrical to the longitudinal axis of the filling tube (L), and in particular comprises a tensioning device (5) which exerts a variable force on the brake ring (1) such that the brake force is adjustable, and the tensioning device (5) comprises two tensioning means (5a, 5b) between which the brake ring (1) is arranged, the tensioning means (5a, 5b) each being embodied to be non-symmetrical to the longitudinal axis of the filling tube (L).

13. Sausage casing brake (10) according to at least one of claims 3 to 12, **characterized in that** the brake ring (1) is closed and the plane in which the braking area (2) is lying is inclined by 10° to 45° with respect to a plane which is perpendicular to the longitudinal axis of the filling tube (L).

14. Sausage casing brake according to claim 3 or 10, **characterized in that** the brake ring (1) is formed at a filling tube end and the braking area (2) presses against a surface (31), in particular a sleeve, arranged around the brake ring (31), wherein in particular either
the brake ring (1) comprises an elevation (22) winding around the longitudinal axis of the filling tube (L) or an indentation (23) winding around the longitudinal axis of the filling tube (L), or the surrounding surface (31), in particular the sleeve, comprises an elevation winding around the longitudinal axis of the filling tube (L) or an indentation winding around the longitudinal axis of the filling tube.

15. Sausage casing break according to at least one of claims 3 to 9, **characterized in that** the brake ring (1) is designed as a sleeve at the inner surface of which an elevation (22) or indentation (23) is formed which winds around the longitudinal axis of the filling tube.

16. Filling machine for filling a sausage casing with pasty mass with a filling tube (3) and with a sausage casing brake (10), according to at least one of claims 3 to 15, wherein the braking area (2) of the brake ring (1) extends around the longitudinal axis of the filling tube (L) such that in a plane (E) perpendicular to the longitudinal axis of the filling tube (L), the braking area (2) of the brake ring (1) may only press onto a part of the circumference of the sausage casing, wherein the sausage casing brake (1) comprises a drive via which the brake ring (1) may be rotated in particular at variable speeds.

17. Filling machine according to claim 16, **characterized in that** either
- the brake ring (1) winds around the longitudinal axis of the filling tube (L), or
- either the surface of the filling tube (3) or the surface of the brake ring (1) facing the filling tube comprises an elevation (22) or an indentation (23) which preferably winds around the longitudinal axis of the filling tube (L), or
- the surface of the brake ring (1) or a surface (31), in particular a sleeve, arranged around the brake ring comprises an elevation (22) or an indentation (23) which preferably winds around the longitudinal axis of the filling tube (L).

18. Filling machine according to at least one of claims 16 to 17, **characterized in that**, seen in the plane (E), at least one free section (12) is formed through which a sausage casing may be passed without being slowed down, wherein the at least one section extends in the plane (E) over at least 20° of the circumference of the filling tube.

## Revendications

1. Procédé de fabrication de saucisses à l'aide d'une machine de remplissage (100), d'après lequel la masse pâteuse est refoulée à travers un tube de remplissage (3) dans un boyau de saucisse (11) enfilé de manière froncée sur le tube de remplissage, et une force de freinage est exercée sur le boyau de saucisse (11) au moyen d'un frein de boyau de saucisse (10), grâce à une surface de freinage (2) d'un anneau de freinage (1) appuyant sur le boyau de saucisse (11),
**caractérisé en ce que**
le frein de boyau de saucisse (10) comprend un entraînement par l'intermédiaire duquel l'anneau de freinage (1) est mis en rotation,
la surface de freinage (2) s'étend autour de l'axe longitudinal (L) du tube de remplissage de façon telle, que dans un plan (E) perpendiculaire à l'axe longitudinal (L) du tube de remplissage, la surface de freinage de l'anneau de freinage (1) n'appuie que sur une partie de la périphérie du boyau de saucisse, et
la force de freinage qu'exerce la surface de freinage sur la surface du boyau de saucisse (11), est répartie dans une direction le long de l'axe longitudinal (L) du tube de remplissage.

2. Procédé selon la revendication 1, **caractérisé en ce que** pour réaliser une zone de torsion, on fait tourner le frein de boyau de saucisse (10), la vitesse de rotation du frein de boyau de saucisse étant différente de la vitesse de rotation du tube de remplissage, ou égale à celle-ci, ou bien est variable.

3. Frein de boyau de saucisse (10) pour une machine de remplissage (100), comprenant un anneau de freinage (1), qui est en mesure d'exercer une force de freinage sur le boyau de saucisse (11) grâce à une surface de freinage (2) de l'anneau de freinage (1) appuyant sur le boyau de saucisse, **caractérisé en ce que** le frein de boyau de saucisse (10) comprend un entraînement par l'intermédiaire duquel l'anneau de freinage (1) peut être mis en rotation, notamment avec une vitesse de rotation variable,
la surface de freinage (2) s'étend autour de l'axe longitudinal (L) du tube de remplissage de façon telle, que dans un plan (E) perpendiculaire à l'axe longitudinal (L) du tube de remplissage, la surface de freinage (2) de l'anneau de freinage (1) n'est en mesure d'appuyer que sur une partie de la périphérie du boyau de saucisse, et la force de freinage qu'exerce la surface de freinage sur la surface du boyau de saucisse (11), est répartie dans une direction le long de l'axe longitudinal (L) du tube de remplissage.

4. Frein de boyau de saucisse (10) selon la revendication 3, **caractérisé en ce que** la surface de freinage de l'anneau de freinage (1) s'enroule au moins autour d'une partie de la périphérie du tube de remplissage (3) dans une direction le long de l'axe longitudinal (L) du tube de remplissage, de sorte qu'il existe notamment un plan (K), qui contient l'axe longitudinal (L) du tube de remplissage et dans lequel la surface de freinage (2) est en appui, sur des côtés opposés de l'axe longitudinal (L) du tube de remplissage, en des endroits (S₁, S₂) décalés l'un par rapport à l'autre dans la direction longitudinale.

5. Frein de boyau de saucisse (10) selon l'une au moins des revendications précédentes, **caractérisé en ce que** l'anneau de freinage (1) couvre une zone périphérique du tube de remplissage (3) de 300° à 720°.

6. Frein de boyau de saucisse (10) selon l'une au moins des revendications 3 à 5, **caractérisé en ce que** la surface de freinage (2) de l'anneau de freinage (1) s'enroule sensiblement selon une forme en spirale autour du tube de remplissage (3).

7. Frein de boyau de saucisse (10) selon au moins la revendication 6, **caractérisé en ce que** la hauteur de pas g de la spirale se situe dans une plage > 0 mm jusqu'à 30 mm, notamment de 5 mm à 15 mm.

8. Frein de boyau de saucisse (10) selon l'une au moins des revendications 3 à 7, **caractérisé en ce que** l'anneau de freinage (1) est d'une configuration en plusieurs parties, et comprend de préférence au moins deux tronçons de spirale (1a, b).

9. Frein de boyau de saucisse (10) selon l'une au moins des revendications 3 à 7, **caractérisé en ce que** l'anneau de freinage (1) est réalisé en un matériau élastique, en particulier en un matériau du groupe des élastomères.

10. Frein de boyau de saucisse (10) selon l'une au moins des revendications 3 à 9, **caractérisé en ce que** la surface de freinage (2) s'étend de manière non symétrique par rapport à l'axe longitudinal (L) du tube de remplissage.

11. Frein de boyau de saucisse (10) selon l'une au moins des revendications 3 à 10, **caractérisé en ce que** l'anneau de freinage (1) est agencé de manière à pouvoir s'étendre autour du tube de remplissage (3) de façon à ce que la surface de freinage (2) puisse appuyer sur la surface du tube de remplissage.

12. Frein de boyau de saucisse selon l'une au moins des revendications 3 à 11, **caractérisé en ce que** le frein de boyau de saucisse comprend un support d'anneau de freinage (4), qui est de configuration non symétrique par rapport à l'axe longitudinal (L) du tube de remplissage, et comporte notamment un dispositif de serrage (5) exerçant une force variable sur l'anneau de freinage (1) de façon telle, que la force de freinage soit réglable, et le dispositif de serrage (5) comprend deux moyens de serrage (5a, 5b) entre lesquels est agencé l'anneau de freinage (1), les moyens de serrage (5a, 5b) étant chacun non symétrique par rapport à l'axe longitudinal (L) du tube de remplissage.

13. Frein de boyau de saucisse (10) selon l'une au moins des revendications 3 à 12, **caractérisé en ce que** l'anneau de freinage (1) est fermé, et le plan, dans lequel se situe la surface de freinage (2), est incliné de 10° à 45° par rapport à un plan qui est perpendiculaire à l'axe longitudinal (L) du tube de remplissage.

14. Frein de boyau de saucisse selon la revendication 3 ou la revendication 10, **caractérisé en ce que** l'anneau de freinage (1) est formé à une extrémité du tube de remplissage et la surface de freinage (2) appuie contre une surface (31) agencée autour de l'anneau de freinage, notamment d'une douille, avec
soit l'anneau de freinage (1), qui présente une proéminence (22) s'enroulant autour de l'axe longitudinal (L) du tube de remplissage, ou bien un creux (23) s'enroulant autour de l'axe longitudinal (L) du tube de remplissage,
soit la surface (31) s'étendant autour, notamment la douille, qui présente une proéminence s'enroulant autour de l'axe longitudinal (L) du tube de remplissage, ou bien un creux s'enroulant autour de l'axe longitudinal du tube de remplissage.

15. Frein de boyau de saucisse (10) selon l'une au moins des revendications 3 à 9, **caractérisé en ce que** l'anneau de freinage (1) est réalisé sous forme de douille sur la surface intérieure de laquelle est réalisé une proéminence (22) ou un creux (23), qui s'enroule autour de l'axe longitudinal du tube de remplissage.

16. Machine de remplissage pour remplir du boyau de saucisse avec une masse pâteuse à l'aide d'un tube de remplissage (3) et comprenant un frein de boyau de saucisse (10) selon l'une au moins des revendications 3 à 15, dans laquelle la surface de freinage (2) de l'anneau de freinage (1) s'étend autour de l'axe longitudinal (L) du tube de remplissage de façon telle, que dans un plan (E) perpendiculaire à l'axe longitudinal (L) du tube de remplissage, la surface de freinage (2) de l'anneau de freinage (1) ne puisse appuyer que sur une partie de la périphérie du boyau de saucisse, et dans laquelle le frein de boyau de saucisse (10) comprend un entraînement par l'intermédiaire duquel l'anneau de freinage (1) peut être mis en rotation, notamment avec une vitesse de rotation variable.

17. Machine de remplissage selon la revendication 16, **caractérisée en ce que** c'est
soit l'anneau de freinage (1) qui s'enroule autour de l'axe longitudinal (L) du tube de remplissage,
soit la surface du tube de remplissage (3) ou la surface de l'anneau de freinage (1) dirigée vers le tube de remplissage, qui présente une proéminence (22) ou un creux (23), s'enroulant de préférence autour de l'axe longitudinal (L) du tube de remplissage,
soit la surface de l'anneau de freinage (1) ou une surface (31), notamment une douille, agencée autour de l'anneau de freinage, qui présente une proéminence (22) ou un creux (23), s'enroulant de préférence autour de l'axe longitudinal (L) du tube de remplissage.

18. Machine de remplissage selon l'une au moins des revendications 16 à 17, **caractérisée en ce que** vu dans le plan (E), est formé au moins un secteur libre (12), par lequel un boyau de saucisse peut être guidé de manière non freinée, ledit au moins un secteur dans le plan (E) s'étendant sur au moins 20° de la circonférence ou périphérie du tube de remplissage.
